# EUROPÄISCHE PATENTSCHRIFT

(11) **EP 2 545 199 B1**
(45) Veröffentlichungstag und Bekanntmachung des Hinweises auf die Patenterteilung: **14.08.2019**
(21) Anmeldenummer: 11713202.7
(22) Anmeldetag: 11.03.2011
(51) Int. Cl.: C23C 18/12, C04B 35/16, C04B 35/624, C04B 35/14, A47J 36/02

(54) **METALLISCHE OBERFLÄCHEN MIT DÜNNER, GLAS- ODER KERAMIKARTIGER SCHUTZSCHICHT MIT HOHER CHEMISCHER BESTÄNDIGKEIT UND VERBESSERTEN ANTIHAFT-EIGENSCHAFTEN**
METAL SURFACES COMPRISING A THIN GLASS- OR CERAMIC-TYPE PROTECTIVE LAYER HAVING HIGH CHEMICAL RESISTANCE AND IMPROVED NON-STICK PROPERTIES
SURFACES MÉTALLIQUES DOTÉES D'UNE MINCE COUCHE DE PROTECTION EN VERRE OU EN CÉRAMIQUE À HAUTE RÉSISTANCE ET AUX PROPRIÉTÉS ANTI-ADHÉSIVES AMÉLIORÉES

(30) Priorität: 12.03.2010 DE 102010011185
(43) Veröffentlichungstag der Anmeldung: 16.01.2013
(73) Patentinhaber: EPG (Engineered nanoProducts Germany) AG, 64347 Griesheim (DE)
(72) Erfinder: SCHMIDT, Helmut, 66130 Saarbrücken-Güdingen (DE); SCHMIDT, Carsten Ludwig, 66119 Saarbrücken (DE); SCHMIDT, Christian, 66119 Saarbrücken (DE)
(74) Vertreter: Held, Stephan
(86) Internationale Anmeldenummer: PCT/EP2011/053733
(87) Internationale Veröffentlichungsnummer: WO 2011/110681

(56) Entgegenhaltungen:
- EP-A1- 1 806 385
- WO-A2-2009/000874
- DE-A1- 19 714 949
- US-A- 5 108 793
- US-A- 5 660 884
- US-A- 5 700 523
- US-A1- 2002 012 804

## Beschreibung

Glasartige oder keramikartige Schutzschichten werden auf metallische Formkörper in der Regel entweder über Emaillierungsprozesse, über Flamm- oder Plasmaspritzprozesse, Druckverfahren wie Siebdruckprozesse oder über Gasphasenprozesse aufgebracht. Zum Auftragen von sehr dünnen Schichten eignen sich praktisch ausschließlich Gasphasenprozesse Darüber hinaus ist es auch möglich, zum Beispiel über Tauchprozesse so genannte Sol-Gel-Schichten aufzutragen, deren Schichtdicken nach oben allerdings auf circa 1 µm begrenzt sind (siehe C.J Brinker, G.W. Scherer: "Sol-Gel Science - The Physics and Chemistry of Sol-Gel-Processing", Academic Press, Boston, San Diego, New York, Sydney (1990)).. Solche Schichten weisen wegen ihrer sehr geringen Schichtdicke weder ausreichende mechanische noch chemische Eigenschaften, z.B. im Hinblick auf den Angriff durch Säuren oder Basen, Korrosionsfestigkeit oder Spülmaschinenbeständigkeit, auf. Bei Gasphasenabscheidungen werden in der Regel keine "pinhole"-freien Schichten erzielt, da aufgrund des kinetisch kontrollierten Kristallwachstums an der Oberfläche keine hermetisch schließenden Schichtstrukturen erhalten werden.

Zur Erzielung von dichten Email-Schichten müssen Glaszusammensetzungen herangezogen werden, die im Vergleich zu Glasschmelzprozessen (in der Regel über 1000°C) bei relativ niedrigen Temperaturen leicht aufschmelzen müssen, um einen zusammenhängenden Überzug auf der Metalloberfläche bilden zu können. Die Aufschmelztemperaturen liegen in der Regel allerdings immer noch zwischen 750 und 800°C, wenn toxikologisch unbedenkliche Emails mit einem Mindestanspruch an ausreichender chemischer Beständigkeit, zum Beispiel gegen kochendes Wasser, schwache Säuren oder kochende oder garende Lebensmittel, erhalten werden sollen. Wegen ihres im Hinblick auf die leichte Aufschmelzbarkeit erforderlichen hohen Alkaligehaltes sind solche Schichten in der Regel von niedriger chemischer Beständigkeit, und zum Beispiel bei der Reinigung durch Spülmaschinen nur von begrenzter Haltbarkeit (sog. "Glaskorrosion"). Es kommt hinzu, dass wegen der notwendigen großen Schichtdicke die Ausdehnungskoeffizienten solcher Emails relativ gut den metallischen Formkörpern angepasst werden müssen, was die Auswahl der Zusammensetzung sehr stark einschränkt, da sonst Spannungen mit Rissbildung bis hinzu Abplatzungen die Folge sind.

Dies ist auch einer der Gründe, warum zum Beispiel Email auf Aluminium im Hausgerätebereich, insbesondere bei Kochgeschirr, kaum zum Einsatz kommt, weil Aluminium schon bei Temperaturen etwas über 600°C schmilzt bzw. sich stark verformt. Analog sind die Verhältnisse beim Magnesium oder bei Magnesiumaluminiumlegierungen Das gleiche gilt auch für Metallbauteile, die aus mehreren Komponenten zusammengesetzt sind, wenn eine dieser Komponenten aus dem Bereich der oben genannten Leichtmetalle stammt

Nachgewiesenermaßen treten oben angesprochene Nachteile bei der Auftragung dünner glasiger Sol-Gel-Schichten weit weniger auf, da sie wegen ihrer speziellen Mikrostruktur andere elastische Eigenschaften aufweisen. So können zum Beispiel Sol-Gel-Schichten mit bis zu 1 µm Dicke ohne weiteres auf 500 bis 700°C aufgeheizt werden, ohne dass Rissbildung, z B auf Edelstahl, auftritt

In den Patentschriften US-A-6162498 und US-A1-20080118745 werden Verfahren beschrieben, bei denen glasartige, relativ abriebsfeste und gegen Oxidationskorrosion, z.B. Anlaufen von Edelstahl, beständige Schichten beschrieben werden Die Verfahren umfassen die Herstellung einer Beschichtungslösung über Hydrolyse und Polykondensation eines oder mehrerer Silane in Gegenwart von kolloidalem Kieselsol und mindestens einer Komponente aus der Gruppe der Alkali- und Erdalkali-Oxide und/oder -Hydroxide; die Anwendung der Beschichtungslösung auf einer Metalloberfläche zur Ausbildung einer Schicht; und eine thermische Verdichtung zur Ausbildung eines glasartigen Films.

In US-A-6162498 werden Verdichtungstemperaturen zwischen 350 und 500°C eingesetzt In der US 20080118745 wird darüber hinaus die Bildung von formbaren glasartigen Schichten durch Verdichtung einer alkalisilikathaltigen Schicht in einem Zweistufenprozess mit einer bevorzugten Temperatur von 500°C, die Herstellung von Schichtsystemen über Tauchen und Sprühen mit Schichten im Bereich von 5 bis 10 µm und das Auftragen der Beschichtungen auf Metalloberflächen und Metallkomponenten, insbesondere auf Edelstahl, aber auch auf Aluminium und Aluminiumlegierungen beschrieben.

Die in den vorstehend zitierten Patentschriften aufgeführten Beschichtungen weisen jedoch gegen Säuren und mehr noch im alkalischen Milieu nur eine zeitlich begrenzte Lebensdauer auf, von einer jahrelangen Stabilität kann keine Rede sein Allerdings wird von Kunden genau dies erwartet, Garantieerklärungen bis zu 15 Jahren sind keine Seltenheit. So können diese Schichten schon mit verdünnter Natronlauge (15 %) bei mäßigen Temperaturen (60-90°C) in kurzer Zeit quantitativ entfernt werden und sind in keinem Falle dauerspülmaschinenbeständig.. Das heißt, sie sind im Normalfall für den Lebensmittelbereich oder als Schutzschichten für Anwendungen bei höheren oder tieferen pH-Werten nicht geeignet

Es ist zwar in der einschlägigen Sol-Gel-Literatur bekannt, dass die chemische Beständigkeit durch den Einbau von katalytischen, Netzwerk verdichtend wirkenden Fremdionen, wie z.B. Eisen, Titan, Aluminium und Zirconium, deutlich verbessert werden kann, jedoch haben diese Elemente gravierende Nachteile bei der Stabilität der Beschichtungssole, da durch die katalytische Wirkung keine ausreichend lange "Topfzeit" für einen Sprühbeschichtungsprozess erreicht wird, und beim thermischen Verdichtungsprozess selbst

Neben der geforderten mechanischen, thermischen und chemischen Däuerbeständigkeit ist in vielen Bereichen des Weiteren insbesondere eine sogenannte "easy-to-clean"-Oberfläche, d.h. eine Oberfläche mit Antihafteigenschaften, erwünscht. Insbesondere auf Gegenständen, die z.B. zum Kochen, Braten, Garen oder Grillen eingesetzt werden, ist dies ein wichtiges Thema.

Unbehandelte Metalloberflächen besitzen praktisch keine Antihafteigenschaften, insbesondere beim Erhitzen. Lebensmittel und Öle backen an und können dann nur mit erheblichem mechanischem Aufwand wieder restlos entfernt werden Stand der Technik zur Verminderung dieses Problems ist der Einsatz von organischen fluorhaltigen Polymeren (PTFE, "Teflon"). So beschichtete Oberflächen weisen eine exzellente hydrophobe und olephobe Wirkung aus. Allerdings ist seit langem bekannt, dass mit Telfon beschichte Oberflächen weder mechanisch noch thermisch stabil sind. Dauereinsätze in Küchen haben ergeben, dass der "Teflon-Effekt" sehr bald abklingt, insbesondere beim Einsatz metallischer Schaber, Wender oder Löffel.

Überdies wird PTFE inzwischen lebensmittelrechtlich als bedenklich eingestuft wird, was darauf zurückzuführen ist, dass das hochpolymere PTFE bei höheren Temperaturen sich in flüchtige ringförmige, teilweise oxidierte molekulare Gebilde umlagert ("ring-chain-equilibrium"). Diese Bestandteile können dann z.B. in Speisen oder Flüssigkeiten welche sich im direkten Kontakt mit der beschichten Oberfläche befinden eindiffundieren bzw. migrieren oder werden direkt eingeatmet. Nachweislich führt insbesondere das Einatmen zur Beeinträchtigung der Gesundheit ("Teflon-Fieber", PTFE toxicosis). Zur Unterbindung dieses Risikos sollte die Menge an PTFE in Beschichtungen deutlich reduziert werden oder komplett entfallen.

EP 1806385 A1 betrifft eine Beschichtungszusammensetzung auf Basis von hydrolysierbaren Silanverbindungen und eines Triazinderivats und ein Verfahren zum Beschichten eines Substrats mit einer metallischen Oberfläche mit dieser Beschichtungszusammensetzung. Das Substrat kann vor der Beschichtung mit einer Lösung von einem Alkalisilicat vorbehandelt werden.

US 5700523 A beschreibt ein Verfahren zur Behandlung einer Metalloberfläche zur Verbesserung der Korrosionsbeständigkeit und Lackhaftung, bei dem die Metalloberfläche mit einem ersten Bad enthaltend eine Lösung, die ein Natriumsilicat oder ein Kaliumsilicat umfasst, mit einem zweiten Bad enthaltend eine Lösung, die ein hydrolysierbares Silan umfasst, und dann mit einem dritten Bad umfassend eine chromfreie Vorbehandlung kontaktiert wird.

US 5108793 A beschreibt ein Verfahren zur Beschichtung von Stahl mit einer korrosionsbeständigen Beschichtung, wobei das Verfahren das Spülen des Stahlsubstrats mit einer Lösung umfassend ein Alkalisilicat und ein Metallsalz, das Trocknen zur Bildung einer relativ unlöslichen Silicatbeschichtung und das Spülen des so erhaltenen Substrats mit einer hydrolysierbare Silane enthaltenden Lösung umfasst.

In US 5660884 A wird ein Verfahren zur Vorbereitung einer Oberfläche aus Titan oder einer Titanlegierung für eine Verklebung beschrieben, bei dem die Oberfläche mit einer wässrigen Alkalisilicatlösung und anschließend mit einer Lösung, die ein reaktives organofunktionelles Silan umfasst, behandelt wird.

US 2002/012804 A1 betrifft ein Verfahren zur Behandlung einer elektrisch leitfähigen Oberfläche, bei dem ein Alkalisilicat aus einer Lösung elektrolytisch auf die Oberfläche abgeschieden wird. Auf die so behandelte Oberfläche kann eine Deckschicht aufgebracht werden, z.B. eine Schicht auf Basis von hydrolysierbaren Silanen.

DE 19714949 A1 beschreibt metallische Oberflächen mit einer glasartigen Schicht, bei der es sich um eine Erdalkali- und/oder Alkalisilikatschicht oder eine Alkali- oder Erdalkalimetall-freie Schicht handeln kann. Die Schichtdicke kann 1 bis 10 µm betragen. Über diese Schicht kann eine weitere Schicht aufgebracht werden, z.B. auf Basis hydrolysierbarer Silane.

Der Erfindung lag die Aufgabe zugrunde, metallische Substrate mit einer glas-, glaskeramik- oder keramikartigen Beschichtung mit verbesserten chemischen, insbesondere verbesserten alkaliresistenten bis hin zur dauerspülmaschinenfesten Eigenschaften, bereitzustellen, die darüber hinaus im Vergleich zur unbeschichteten Metalloberfläche eine wesentlich bessere Antihafteigenschaft aufweisen sollte, wobei allerdings auf PTFE ("Teflon") komplett verzichtet werden sollte.

Es wurde nun überraschenderweise gefunden, dass die in der oben zitierten Literatur (US-A-6162498, US-A-20080118745) geschilderten Nachteile dieser Schichten überwunden werden können, wenn die Alkalisilikatschicht auf der Metalloberfläche mit einer Alkali- oder Erdalkaliionen-freien Sol-Gel-Schicht überschichtet wird, die anschließend thermisch verdichtet wird, so dass eine zweischichtige Schutzschicht gebildet wird.

Die Erfindung betrifft somit einen Gegenstand umfassend eine metallische Oberfläche, die mit einer glas-, glaskeramik- oder keramikartigen Schutzschicht versehen ist, wobei die Schutzschicht eine Grundschicht umfassend eine Matrix aus einem Alkali- und/oder Erdalkalisilikat und eine Alkalimetall- und Erdalkalimetall-freie Deckschicht umfassend eine Matrix aus einer oxidischen Siliciumverbindung umfasst, wobei die Grundschicht eine Schichtdicke von 1 bis 20 µm aufweist, dadurch gekennzeichnet, dass in der Grundschicht ein oder mehrere Pigmente ausgewählt aus einem Oxid von einem oder mehreren Elementen ausgewählt aus Al, Sn, Y, Ce, Ti, Zr, Fe, Co, Ni, Cu, Zn, Nb und Ta enthalten sind. Des weiteren betrifft die Erfindung ein Verfahren zur Herstellung einer solchen Schutzschicht auf der metallischen Oberfläche eines Gegenstands.

Gemäß der Erfindung wird bevorzugt nach dem Trocknen oder thermischen Verdichten einer auf eine Metalloberfläche aufgetragenen üblichen Alkalisilikat- und/oder Erdalkalisilikat-haltigen Beschichtungszusammensetzung als Grundschicht eine weitere jetzt aber Alkali- und Erdalkaliionen-freie Beschichtungszusammensetzung, bevorzugt als Sol-Gel-Schicht aufgebracht und thermisch verdichtet, um eine Deckschicht zu bilden. Die Deckschicht ist in der Lage, die Alkali- oder Erdalkali-Ionen enthaltende Schicht hermetisch zu versiegeln, und weist eine wesentlich bessere chemische Beständigkeit als die Grundschicht auf. Das erfindungsgemäße Schichtsystem weist eine vorzügliche chemische und hydrolytische Stabilität, z.B. eine hohe Spülmaschinenbeständigkeit auf.

Vorteilhaft ist auch der Kontakt der Pigmente mit der Beschichtungszusammensetzung für die Grundschicht während des Auftrags und der thermischen Verdichtung, insbesondere wenn diese katalytisch aktiv sind, d.h. Komponenten oder Ionen enthalten, die eine positive katalytische Wirkung auf das Verdichtungsverhalten von silikatischen Sol-Gel-Schichten aufweisen. Besonders bevorzugt sind Pigmente, die Übergangsmetalle aus der Eisengruppe, aus der vierten Nebengruppe oder Elemente der dritten Hauptgruppe des Periodensystems der Elemente enthalten. Bei den Pigmenten kann es sich um handelsübliche Pigmente handeln. Beispiele sind plättchenförmige Pigmente, z.B. Aluminiumoxid, Effekt-Pigmente wie Interferenz-Pigmente, oder Pigmente als Pulver in beliebigen Formen, wie zum Beispiel Eisenspinelle, die z.B. als Schwarzpigmente dienen.

In einem weiteren optionalen Schritt kann eine fluorhaltige Beschichtungszusammensetzung, bevorzugt als Sol-Gel-Schicht, auf die Deckschicht aufgebracht und gegebenenfalls eingebrannt werden. Diese kann z.B. aus handelsüblichen hydrophobierenden und/oder oleophobierenden Silanen oder aus Kokondensaten solcher Silane mit Alkoxysilanen und/ oder Orthokieselsäureestern hergestellt werden. Auf diese Weise erhält die Schutzschicht eine zusätzliche Antihafteigenschaft.

Die erfindungsgemäße Kombination einer wie in den Ansprüchen definierten Deckschicht mit einer an sich üblichen Grundschicht wie sie z.B. in US 6162498 beschrieben wird, war im Hinblick auf die Kenntnisse nach Stand der Technik äußerst überraschend. Im Gegensatz zu den Beobachtungen der Erfinder werden in der einschlägigen Literatur widersprüchliche Aussagen getroffen. So ist aus der Kolloidforschung bzw. Sol-Gel-Literatur hinreichend bekannt, dass bei Inkontaktbringen von zwei nanostrukturierten Systemen wie unterschiedliche Partikel oder Schichten, die unterschiedliche Oberflächenladung bzw. unterschiedliche pH-Werte aufweisen, sich diese Systeme gegenseitig fällen bzw. unkontrolliert koagulieren ("Kolloidfällung") und somit keine geordneten Aggregate bzw. porenfreie Schichten ergeben.

Tatsächlich wird gemäß der vorliegenden Erfindung eine Alkali- und/oder Erdalkalisilikat-haltige Grundschicht, d.h. eine alkalische Beschichtungszusammensetzung oder Grundschicht, wie sie z.B. aus US 6162498 bekannt ist, mit einer sauren Alkaliionen und Erdalkaliionen-freien Beschichtungszusammensetzung oder Deckschicht, wie sie z.B. aus DE-A-4417405 bekannt ist, in Kontakt gebracht. Gemäß dem Stand der Technik war zu erwarten, dass die unterschiedlichen, zur Stabilisierung der Beschichtungszusammensetzungen bzw. Sole benötigten Ladungen sich an den Schichtgrenzen gegenseitig neutralisieren. Überraschenderweise tritt diese bekannte Störreaktion nicht auf.

Der Einbau von Pigmenten bzw. Füllstoffen in eine silikatische Matrix ergibt nach thermischer Verdichtung kein homogenes Glas sondern eine Glaskeramik. Es ist bekannt, dass an den Phasengrenzen Glasmatrix-keramisches(r) Pigment/Füllstoff aufgrund unterschiedlicher Schrumpfprozesse während des Sinterns bei höheren Temperaturen Risse entstehen können. Diese Defektstellen reduzieren bekanntermaßen die chemische Stabilität. Erstaunlicherweise tritt dieser bekannte Effekt der Schwächung der glasigen Beschichtung bei der Schutzschicht gemäß der vorliegenden Erfindung nicht auf. Im Gegenteil, es lässt sich in den genannten Fällen sogar eine deutliche Steigerung der chemischen Stabilität beobachten

Die vorliegende Erfindung umfasst eine Verfahren zur Herstellung von Metallgegenständen mit niedrig sinternden, dünnen, glas-, glaskeramik- oder keramikartigen Schutzschichten mit hoher mechanischer, thermischer und chemischer Beständigkeit, besonders geeignet für metallische Bauteile und Komponenten, auch für solche, die aus niedrig schmelzenden Metallen, z.B. Aluminium, Magnesium oder Legierungen aus diesen, oder aus Bauteilen dieser Metalle im Verbund mit hochschmelzenden Metallen bestehen, wobei die Art des Verbundes unerheblich ist.

Als erfindungsgemäß zu beschichtende metallische Oberfläche eignen sich alle aus einem Metall oder einer Metalllegierung bestehenden bzw. dieses oder diese umfassenden Oberflächen von Halbzeugen und Fertigprodukten. Die metallischen Oberflächen können auch vorbehandelt sein, z B verzinkt, verchromt oder emailliert. Als Beispiele für metallische Oberflächen können Oberflächen aus Stahl, insbesondere Edelstahl, Aluminium, Aluminiumlegierungen Zinn, Kupfer, Chrom oder Nickel, einschließlich verzinkter, verchromter oder emaillierter Oberflächen, genannt werden Beispiele für Metalllegierungen sind insbesondere Stahl bzw Edelstahl, Aluminium-, Magnesium- und Kupferlegierungen wie Messing und Bronze. Bevorzugt werden metallische Oberflächen aus Aluminium und Aluminiumlegierungen, Stahl, Edelstahl sowie verzinktem oder verchromtem Stahl verwendet Besonders bevorzugt sind so genannte Sandwichstrukturen, die aus Gründen einer verbesserten Wärmeleitung beziehungsweise Wärmeverteilung Kerne aus Aluminium oder Aluminiumlegierungen enthalten, die jedoch zum Zwecke einer mechanisch beanspruchbaren Oberfläche oder aus dekorativen Gründen Ober- und Unterseiten aus Edelstahl haben. Dieser Dreierverbund hat sich besonders für den Kochbereich, z. B für Grillplatten und andere Kochgeräte und -gefäße bewährt. Dies sind Gegenstände, die besonders bevorzugt mit der Schutzschicht gemäß der vorliegenden Erfindung versehen werden.

Vorzugsweise wird die metallische Oberfläche vor dem Auftrag der Beschichtungszusammensetzung gründlich gereinigt und insbesondere von Fett und Staub befreit. Vor der Beschichtung kann auch eine Oberflächenaktivierung, z.B. durch Corona-Entladung oder Beflammung, durchgeführt werden.

Die metallische Oberfläche bzw das metallische Substrat kann eine ebene oder eine strukturierte Oberfläche aufweisen. Bevorzugt weist die metallische Oberfläche eine strukturierte Oberfläche auf Es kann sich um eine mikrostrukturierte Oberfläche oder um eine Struktur größerer Dimensionen handeln. Die Struktur kann regelmäßig sein, wie sie z.B. durch Prägen erhalten wird, oder unregelmäßig sein, wie sie z.B. durch Aufrauen erhalten wird, wobei Bürsten, Sandstrahlen oder shot-peening gängige Methoden darstellen.

Gemäß der Erfindung werden auf die metallische Oberfläche oder das metallische Substrat zwei oder mehrere glas-, glaskeramik- oder keramikartigen dünnen Beschichtungen durch Auftrag entsprechender Beschichtungszusammensetzungen für die Grundschicht und die Deckschicht auf das Substrat direkt oder auf eine gegebenenfalls Pigmente oder Füllstoffe enthaltende Schicht und thermische Verdichtung der aufgebrachten Schichten erhalten. Bevorzugt handelt es sich bei den Beschichtungszusammensetzungen für die Grundschicht und die Deckschicht jeweils um Beschichtungssole, insbesondere um agglomeratfrei dispergierte Beschichtungssole, wobei der Beschichtungszusammensetzung vorzugsweise kondensationskatalytisch wirkende Pigmente und/oder Füllstoffe zugegeben werden können.

Im folgenden werden Erläuterungen zu erfindungsgemäß bevorzugten und/oder optionalen Verfahrenschritten gemäß der Erfindung gegeben
a) Die Beschichtungszusammensetzung für die Grundschicht, die bevorzugt eine Komposit-Beschichtungslösung oder ein Komposit-Beschichtungssol ist, ist bevorzugt erhältlich durch die Hydrolyse und Kondensation eines oder mehrerer Organoalkoxysilane und gegebenenfalls und bevorzugt mindestens eines Orthokieselsäureesters in Gegenwart mindestens einer Alkalimetallverbindung und/oder Erdalkalimetallverbindung, die vorzugsweise löslich oder thermisch zersetzbar ist Bevorzugte Alkalimetallverbindungen und/oder Erdalkalimetallverbindungen sind ein lösliches Oxid, Hydroxid oder eine lösliche oder thermisch leicht zersetzbare Verbindung eines Alkalimetalls und/oder Erdalkalimetalls Bevorzugt ist eine Alkalimetallverbindung, insbesondere von Lithium, Natrium, Kalium oder Cäsium, Gegebenenfalls kann die Hydrolyse oder Kondensation auch in Gegenwart von kolloidalem Kieselsol und/oder eines Alkoxids aus der dritten oder vierten Haupt- oder Nebengruppen des Periodensystem der Elemente, wie z.B. der Elemente B, Al, Ge, Sn, Ti, Zr, sowie weiterer Elemente wie P oder Nb, durchgeführt werden. Eine Beschichtungszusammensetzung, die bevorzugt für Grundschicht eingesetzt werden kann, ist z.B. die, die in US-A-6162498 zur Herstellung einer glasartigen Schicht beschrieben wird. Auf die dort aufgeführten Angaben wird hiermit ausdrücklich Bezug genommen.
b) Die Beschichtungszusammensetzung, bevorzugt ein Beschichtungssol, für die Grundschicht wird auf die metallische Oberfläche des Gegenstands aufgetragen, bevorzugt mit einer Nassfilmdicke von 5 bis 20 µm, besonders bevorzugt 8 bis 11 µm. Als Auftragverfahren kann jedes übliche nasschemische Auftragverfahren eingesetzt werden. Bevorzugt ist ein Sprühprozess.
c) In der Regel ist es wie üblich zweckmäßig die aufgetragene Beschichtungszusammensetzung zu trocknen, z.B. Abtrocknen des nassen Films bis zur Staubtrockene. Bei der aufgetragenen Beschichtungszusammensetzung handelt es sich üblicherweise z.B um eine Sol-Gel-Schicht.
d) In einer Ausführungsform, kann die aufgetragene Beschichtungszusammensetzung, insbesondere die Sol-Gel-Schicht, der Grundschicht, direkt thermisch verdichtet werden, um die glas-, glaskeramik- oder keramikartige Grundschicht zu bilden. Die Temperaturen können in einem weiten Bereich variieren, z B in einem Bereich von 250 bis 700°C, bevorzugt wird bei Temperaturen im Bereich von 350 bis 600°C, bevorzugter von 450 bis 500°C eingebrannt Die thermische Behandlung kann unter den üblichen Atmosphären durchgeführt werden, z.B. an Luft, unter Inertgas und/oder unter oxidierenden oder reduzierenden Bedingungen Wie dem Fachmann bekannt, können je nach eingesetzten Komponenten bestimmte Atmosphären zweckmäßig sein, z.B. eine reduzierende Atmosphäre bei Verwendung von Ruß als Pigment, oder eine oxidierenden Atmosphäre bei Verwendung von farbgebenden Eisen(III)-Verbindungen, deren Farbe von der Aufrechterhaltung von Eisen(III) während des Einbrennprozesses abhängt
e) Auf das gegebenenfalls abgekühlte Substrat oder die Komponente bzw. auf die Grundschicht davon, die bereits thermisch verdichtet und abgekühlt wurde oder die z.B. nur getrocknet wurde, wird die Beschichtungszusammensetzung der Deckschicht aufgetragen, z.B. eine Zusammensetzung gemäß DE-A-4417405, die hiermit durch Bezugnahme aufgenommen wird, z.B. Beispiel 1. Als Auftragverfahren kann jedes übliche nasschemische Auftragverfahren eingesetzt werden, wobei ein Sprühprozess bevorzugt ist. In der Regel ist es wie üblich zweckmäßig die aufgetragene Beschichtungszusammensetzung zu trocknen, z.B. Abtrocknen des nassen Films bis zur Staubtrockene. Bei der aufgetragenen Beschichtungszusammensetzung handelt es sich üblicherweise z.B. um eine Sol-Gel-Schicht.
f) Die aufgetragene Beschichtungszusammensetzung, insbesondere die Sol-Gel-Deckschicht, wird thermisch verdichtet, um die glas-, glaskeramik- oder keramikartige Deckschicht zu bilden. Die Temperaturen können in einem weiten Bereich variieren, z.B. in einem Bereich von 250 bis 700°C, wobei Temperaturen im Bereich von 350 bis 600°C, und insbesondere von 450 bis 500°C für den Einbrennvorgang bevorzugt sind Bevorzugte Schichtdicken sind dabei 3 bis 8 µm, besonders bevorzugt 4 bis 6 µm Bezüglich der Atmosphäre gilt das zur thermischen Verdichtung der Grundschicht Gesagte entsprechend.
g) Alternativ zu Schritt d) kann auch die Überbeschichtung nach e) z B nach dem Abtrocknen der Beschichtung gemäß Schritt c) erfolgen Der Einbrennprozess der applizierten "Doppelschicht" erfolgt wie in Schritt d) oder f) beschrieben
h) Der Beschichtungszusammensetzung für die Grundschicht und/oder für die Deckschicht, die jeweils bevorzugt ein Beschichtungssol sind, können sowohl in a) als auch in e) Pigmente und/oder Füllstoffe eindispergiert werden. Bei Pigmenten und Füllstoffen handelt es sich um Feststoffteilchen, wobei Pigmente farbgebende Mittel darstellen. Gegebenenfalls können die Pigmente oder Füllstoffe zuvor zur Verbesserung der Dispergierbarkeit mit einer entsprechenden Oberflächenmodifizierung versehen werden, weil die Agglomeratfreiheit der Dispersion die chemischen Beständigkeit der dann finalen homogenen Schicht erhöht. Es sind sowohl plättchenförmige Gebilde als auch andere Geometrien der Pigmente oder Füllstoffe möglich.

Geeignete Pigmente und Füllstoffe sind bekannt und in der Regel im Handel erhältlich. Keramische Pigmente sind wegen Ihrer Temperaturstabilität besonders geeignet. Beispiele sind Weisspigmente, z.B. TiO₂, Schwarzpigmente, z.B. Ruß, komplexe Eisenmischoxide, Buntpigmente für alle sichtbaren Farben.. Details finden sich z.B. in G. Pfaff, "Industrial Inorganic Pigments" Wiley VCH, 2008 oder H. Endriss, "Aktuelle anorganische Buntpigmente", Verlag Vincentz, 1997. Bei den Pigmenten und Füllstoffen kann es sich z.B. um Oxide, z.B. Spinelle, Rutile, Perowskite und Silikate, Sulfide, Oxynitride, Nitride wie BN, Carbide wie SiC oder elementare Formen, z.B. Russ und Kohlenstoff, handeln Die Pigmente und Füllstoffe können jede mögliche Form annehmen, z.B. kugelförmig, z.B. Fe-Spinelle, plättchenförmig, z.B. Interferenzpigmente, Glimmerpigmente, oder faserförmig, z.B AlOOH. Geeignete Füllstoffe sind z.B. abrasive Füllstoffe, die z.B. eine Mohs-Härte von mindestens 7 aufweisen, z.B. plättchenförmiger Al₂O₃, plättchenförmiges SiO₂ und TiO₂.

Die Pigmente der Grundschicht bestehen aus Oxiden der Elemente Al, Sn, Y, Ce, Ti oder Zr oder der Übergangsmetalle Fe, Co, Ni, Cu, Zn, Nb oder Ta. Es können auch Mischungen oder Verbindungen dieser Oxide, z.B. Spinelle, oder mit Interferenzschichten überzogene Oxidpartikel, bevorzugt bestehend aus SiO₂ oder Al₂O₃, oder oxidischen plättchenförmige Partikel, die auch andere oxidische Zusammensetzungen umfassen können, wie z.B. Glimmerplättchen, verwendet werden. Pigmente, die auch im Handel unter dem Namen Effekt- oder Interferenzpigmente erhältlich sind, sind in der Regel zum Beispiel mit oxidischen interferierenden Schichten aus TiO₂, Al₂O₃, ZrO₂ oder Fe₂O₃ überzogen. Diese ermöglichen durch ihre Interferenzwirkung ein breites Spektrum von verschiedenen Farben und erzeugen in dispergierter Form den so genannten "Metallic-Effekt". Selbstverständlich sind diese Oxide lediglich beispielhaft anzusehen und es können auch andere verwendet werden. Dabei ist es unerheblich, in welchen Partikelgrößen diese Pigmente eingesetzt werden. In WO 2008/099008 ist ein Verfahren beschrieben, in welchen durch eine Nassvermahlung solcher Pigmente mit einer Ausgangsgröße von circa 25 µm Pigmente in der Größenordnung von 5 µm erhalten werden, die zu besonders glatten Schichten führen. Für die Erfindung zur Herstellung von spülmaschinenfesten beziehungsweise alkaliresistenten farbigen Schichten spielen jedoch Form und Größe der Pigment-Partikel praktisch keine Rolle. Zweckmäßigerweise sind die Partikel nicht zu groß, der mittlere Durchmesser der Partikel sollte den Mikrometerbereich nicht überschreiten, also z.B. unter 1 mm sein. Bevorzugte Pigmentpartikel haben z.B. einen mittleren Durchmesser von weniger als 200 µm, bevorzugt weniger als 100 µm. Standardgrößen für im Handel erhältliche Pigmente sind z.B. 5 bis 25 µm. Partikel sind auch mit wesentlich kleineren Abmessungen verfügbar.
i) Optional kann bei besonderen Anforderungen an die Antihaftwirkung das Beschichtungssystem um eine fluorhaltige Deckschicht über der vorstehend erläuterten Deckschicht erweitert werden. Hierzu können Beschichtungssysteme verwendet werden, wie sie z.B. in DE 19544763 beschrieben sind. Des Weiteren können auch Lösungen von mit Ethoxysilan modifiziertem Polyfluorethen, z.B. Fluorlink® S10 von Solvay Solexis, oder durch Hydrolyse und Kondensation eines oder mehrerer Organoalkoxysilane, eines oder mehrerer Orthokieselsäureester, Ethoxysilan-modifiziertes Polyfluorethen, gegebenenfalls in Gegenwart von kolloidalem Kieselsol hergestellte Beschichtungssole zum Einsatz kommen.

Diese fluorhaltigen Beschichtungszusammensetzungen werden bevorzugt in äußerst geringer Menge verwendet. Es entsteht bevorzugt nur eine wenige nm-dicke Schicht ("monomolekulare Bedeckung") im Gegensatz zu anderweitig aufgebrachten PTFE (Teflon)-Schichten, die Schichtdicken von mehrere µm aufweisen, und sie weisen keinen polymeren Aufbau auf. Die fluorhaltigen Beschichtungszusammensetzungen gemäß der Erfindung sind nicht dem vorstehen erläuterten "ring-chain"-Gleichgewicht unterworfen und bilden somit auch nicht das gefährliche PFOA.

Die verdichtete Grundschicht ist ein Alkalisilikat- und/oder Erdalkalisilikat bzw. eine Matrix aus Alkalisilikat- und/oder Erdalkalisilikat, wobei es sich bevorzugt um ein Alkalisilikat handelt, in dem Pigmente enthalten sind. Ein Alkalisilikat- und/oder Erdalkalisilikat ist ein Silikat, das Alkalimetallionen und/oder Erdalkalimetallionen enthält. Diese Silikate sind dem Fachmann gut bekannt. Beispiele für bevorzugte Alkalimetalle und Erdalkalimetalle in dem Silikat sind Li, Na, K, Cs, Mg, Ca und/oder Ba, wobei Alkalimetalle, insbesondere Na und/oder K, besonders bevorzugt sind. In dem Silikatgerüst kann gegebenenfalls ein Teil der Si-Ionen durch andere Ionen wie Al ersetzt sein, dies ist aber im Allgemeinen aber nicht bevorzugt. Die Grundschicht ist erhältlich durch nasschemischen Auftrag eines nach dem Sol-Gel-Verfahren erhaltenen Beschichtungssols und der thermischen Verdichtung des Beschichtungssols (Sol-Gel-Schicht) üblicherweise nach Trocknung.

Die verdichtete Grundschicht lässt sich als ein bevorzugt glasiges Alkalisilikat- und/oder Erdalkalisilikat beschreiben. Die Anwesenheit von auslaugbaren Ionen, d.h. die Alkali- oder Erdalkaliionen, in der Grundschicht, welche die chemische Stabilität herabsetzten, erscheint zunächst kontraproduktiv, sie haben sich aber bezüglich geforderter Eigenschaften wie Haftfestigkeit und thermische Ausdehnung der Beschichtung als vorteilhaft erwiesen Bekanntermaßen haben alkaliionen-haltige silikatische Systeme einen anderen (höheren) thermischen Ausdehnungskoeffizienten als Alkaliionen-freie Silikatsysteme Die Quantität dieser Ausdehnung korreliert mit der Natur und der Menge der Alkali- bzw. Erdalkaliionen im silikatischen Netzwerk und kann mit der Funktion der Ionen als netzwerkerweichende "Netzwerkwandler" gedeutet werden.. Metallische Substrate, insbesondere die leicht erweichbaren bzw.. schmelzbaren Metalle, weisen eine deutlich höhere thermische Ausdehnung auf als eine ionenfreie glasige silikatische Beschichtung. Die fehlende "thermische Übereinstimmung" zwischen metallischem Substrat und Beschichtung kann zu Spannungsrissen führen, welche Haftfestigkeit und chemische Stabilität beeinträchtigen. Durch die Zugabe von Alkali- bzw. Erdalkaliionen zur silikatischen Grundschicht kann der thermische Ausdehnungskoeffizient der Schicht an die des Substrates angepasst werden. Risse und Abplatzer werden somit verhindert. Hinzukommt, dass die Grundschicht, welche im direkten Kontakt mit dem metallischen Substrat steht, eine sehr starke, idealerweise eine chemische Bindung eingehen sollte Dies gewährleistet eine effiziente Haftung, welche auch bei punktueller. Beschädigung zu nicht unterwanderfähigen Schichten führt.

Die Bildung dieser chemischen Bindung besitzt offensichtlich bei den gewählten Prozessparametern (thermische Verdichtung) die höchste Triebkraft (Bildungsenthalpie). Diese chemische Verknüpfung von Substrat und Grundschicht ermöglicht die gute Haftung auf dem Substrat Im Falle einer ionenfreien silikatischen Grundschicht würde zur chemischen Verknüpfung die Bildung einer nicht-ionogenen Fe-O-Si-Brücke notwendig sein, welche sich erst bei wesentlich höheren Temperaturen bildet

Die verdichtete Alkali- und Erdalkalimetall-freie Deckschicht umfasst eine Matrix aus einer oxidischen Siliciumverbindung, beispielsweise einem Siliciumoxid, einer Polykieselsäure oder einem Polysiloxan, in der gegebenenfalls zusätzliche Komponenten wie z.B Pigmente oder Füllstoffe oder andere Additive enthalten sind Alkali- und Erdalkalimetall-frei beinhaltet dabei naturgemäß Alkalimetallionen-frei und Erdalkalimetallionen-frei, d.h. die oxidische Siliciumverbindung der Deckschicht ist kein Alkali- und/oder Erdalkalisilikat.. Der Ausdruck: Alkali- und Erdalkalimetall-frei schließt naturgemäß nicht Spuren an Alkalimetall- und Erdalkalimetallionen in der Deckschicht aus, die z.B. durch ionogene Verunreinigungen in den für die Beschichtungszusammensetzung verwendeten Komponenten eingebracht werden können. So kann z.B. in Levasil®, einem Kieselsol, das durch Na⁺-Ionen stabilisiert wird, der Gehalt an Alkali bis zu 0,2 Gew. -% betragen Über den Zusatz von Levasil® in die Beschichtungszusammensetzung der Deckschicht würden daher zwar geringe Mengen an Alkalimetall eingeführt, dies führt aber nicht zur Bildung eines Alkalisilikats. Anders ausgedrückt bedeutet Alkali- und Erdalkalimetall-freie Deckschicht bzw. oxidische Siliciumverbindung, dass das Atomverhältnis von Si zu (Alkalimetall und/oder Erdalkalimetall) größer 500, insbesondere größer 1000 ist.

In dem Silicium-Oxid-Gerüst kann gegebenenfalls ein Teil der Si-Ionen durch andere Ionen wie z.B. Al ersetzt sein, dies ist aber im allgemeinen nicht bevorzugt. Die Deckschicht ist erhältlich durch nasschemischen Auftrag eines nach dem Sol-Gel-Verfahren erhaltenen Beschichtungssols und der thermischen Verdichtung des Beschichtungssols (Sol-Gel-Schicht) üblicherweise nach Trocknung

Durch das Auftragen einer versiegelnden Alkalimetall und Erdalkalimetall-freien Deckschicht gemäß e) auf die Grundschicht a) wird die chemische Beständigkeit der Beschichtung gewährleistet und insbesondere eine deutlich verbesserte Alkalibeständigkeit des Beschichtungssystems erreicht, die für den Gebrauch in Spülmaschinen wichtig ist. Es ist bekannt, dass unversiegelte Alkaliionen-enthaltene Beschichtungen ("Alftafisifikate") im Laufe der Zeit einem hydrolytischen (chemischen) Angriff ausgesetzt sind Dieser Angriff hängt von der Art und der Menge der präsenten Ionen ab Dies führt zum Auslaugen der Ionen aus dem silikatischen Verband und der Bildung von oberflächlichen Alkalimetallcarbonaten (z.B. "Trona"). Daneben wird der silikatische Verband in ein instabiles wasserhaltiges Xerogel der Kieselsäure überführt. Beide Effekte (Karbonat- und Xerogelbildung) führen zur Eintrübung der zuvor "glasklaren" Beschichtung ("Glaskorrosion"). Durch die Überbeschichtung der Alkali- und/oder Erdalkalisilikat-Grundschicht mit einer ionenfreien Sperrschicht wird der Auslaugvorgang gebremst. Dies liegt daran, dass der nahezu porenfreie Überzug der Deckschicht die Diffusionswege der Alkaliionen bzw. der aggressiven chemischen molekularen Agenzien (Säuren, Basen, Wasser) signifikant reduziert. Diese mobilen Bestandteile können nur zueinander finden, wenn sie durch das silikatische Netzwerk der Deckschicht, die als Sperrschicht wirkt, diffundieren. Dieser Prozess erfolgt in der Praxis mit so geringer Geschwindigkeit, dass er praktisch nicht beobachtbar ist und von einer Dauerstabilität gesprochen werden kann.

Durch den Zusatz der Pigmente in der Grundschicht kann diese Stabilität noch zusätzlich erhöht werden. Dieser Effekt lässt sich damit erklären, dass, wie aus der einschlägigen Glasliteratur bekannt ist, die Alkalibeständigkeit von glasartigen silikatischen Systemen signifikant verbessert werden kann, wenn bestimmte, netzwerkstabilisierende Ionen in die Glasstruktur eingebaut werden. Dazu gehören die oben aufgeführten Elemente der dritten und vierten Haupt- und Nebengruppe sowie die Übergangsmetalle der Eisengruppe. Der beobachtbare netzwerkstabilisierende Effekt kann mit der Diffusion solcher Ionen aus der Pigment-/Additivoberfläche in die Mikro- beziehungsweise Nanoporenstruktur des Beschichtungswerkstoffes nach a) erklärt werden, bevor sich die Struktur thermisch zum porenfreien glasartigen Verband verdichtet hat.

Eine wichtige Aufgabe dieser Erfindung war es, ein Beschichtungssystem zu entwickeln, mit dem Gebrauchsgegenstände, Küchengeräte, Kochgeschirr, Besteck, Accessoires, Elektrogeräte und vieles andere mehr, bei denen neben einem hohen Maß an dekorativer Wirkung auch eine ausreichende chemische Beständigkeit erforderlich ist und bei denen durch die alleinige Verwendung von Metallen mit niedrigen Erweichungs- oder Schmelzpunkt oder die Verwendung dieser Metalle in Kombination mit hochschmelzenden Metallen (Kupfer, Stahl, Edelstahl, Messing) die Verwendung von handelsüblichen sogenannten "säurefesten" Emails nicht möglich ist. Eine dieser Anforderungen ist die oben beschriebene Spülmaschinenfestigkeit. Beispiele für andere Anforderungen sind die Beständigkeit gegen Hautschweiß, gegen Säuren und Laugen, gegen die verschiedenen Komponenten in Lebensmitteln, z B. organische Säuren, Komplexbildnder, Eiweiße, Tenside usw, oder gegen Salzbelastung, z.B im Automobilsektor

Die Beschichtungszusammensetzung für die Grundschicht ist z.B. erhältlich durch Hydrolyse und Polykondensation eines oder mehrerer Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe das mindestens ein Silan mit n 1 oder 2 verwendet wird, oder davon abgeleiteter Oligomere, in Anwesenheit von
a) mindestens einer Alkali- und Erdalkalimetallverbindung, bevorzugt aus der Gruppe der Oxide und Hydroxide oder der organometallischen Verbindungen der Alkali- und Erdalkalimetalle und
b) gegebenenfalls zugesetzten SiO₂-Teilchen, insbesondere nanoskaligen SiO₂-Teilchen und/oder
c) gegebenenfalls von Alkoxiden oder löslichen Verbindungen der Metalle B, Al, Si, Ge, Sn, Y, Ce, Ti oder Zr,

Die Alkali- oder Erdalkalimetallverbindung kann z.B. eine Verbindung von Li, Na, K, Mg, Ca oder Ba sein, wobei auch mehrere verwendet werden können. Es handelt sich bevorzugt um basische Verbindungen, z.B. Oxide und Hydroxide der Alkali- und Erdalkalimetalle. Bei diesen Oxiden und Hydroxiden handelt es sich vorzugsweise um solche von Li, Na, K, Mg, Ca und/oder Ba. Vorzugsweise werden Alkalimetallhydroxide, insbesondere NaOH und KOH, verwendet Als organometallische Verbindungen kommen z.B. Alkoxide der Alkali- und Erdalkalimetalle in Betracht, z.B. Calciumalkoxide.

Die erfindungsgemäß hergestellten Grundschichten haben eine Schichtdicke von 1 bis 20 µm, vorzugsweise 5 bis 15 µm und insbesondere 8 bis 12 µm.

Die Beschichtungszusammensetzung für die Deckschicht ist z.B. erhältlich durch Hydrolyse und Polykondensation eines oder mehrerer Silane der allgemeinen Formel (I):

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe das mindestens ein Silan mit n 1 oder 2 verwendet wird, oder davon abgeleiteter Oligomere. Optional kann die Hydrolyse und Polykondensation gegebenenfalls in Anwesenheit von
a) gegebenenfalls zugesetzten SiO₂-Teilchen, insbesondere nanoskaligen SiO₂-Teilchen und/oder
b) gegebenenfalls von Alkoxiden oder löslichen Verbindungen der Metalle B, AI, Si, Ge, Sn, Y, Ce, Ti oder Zr
   durchgeführt werden.

Die erfindungsgemäß hergestellten Deckschichten haben in der Regel eine Schichtdicke von 1 bis 15 µm, vorzugsweise 4 bis 12 µm und insbesondere 6 bis 10 µm.

Fluorhaltige Beschichtungszusammensetzungen werden z.B. in DE-A-19544763 beschrieben, die hiermit unter Bezugnahme aufgenommen werden. Die Beschichtungszusammensetzung für die fluorhaltige Antihaftschicht, die optional auf die Deckschicht aufgebracht werden kann, ist z.B. erhältlich durch Hydrolyse und Polykondensation eines oder mehrerer Silane der allgemeinen Formel (II) (Fluorsilane):

Rf(R)_{b}SiX_{(3-b)} (II)

worin X und R wie in Formel (I) definiert sind, Rf eine nicht-hydrolysierbare Gruppe ist, die 1 bis 30 Fluoratome an aliphatische Kohlenstoffatome gebunden aufweist, und b 0, 1 oder 2 ist, und
gegebenenfalls und bevorzugt eines oder mehrerer Silane der allgemeinen Formel (I) wie vorstehend für die Grundschicht und Deckschicht definiert, gegebenenfalls in Anwesenheit von
a) gegebenenfalls zugesetzten SiO₂-Teilchen, insbesondere nanoskaligen SiO₂-Teilchen, und/oder
b) gegebenenfalls von Alkoxiden oder löslichen Verbindungen der Metalle B, Al, Si, Ge, Sn, Y, Ce, Ti oder Zr.

Rf weist bevorzugt 2 bis 30 aliphatische C-Atome auf, wobei an mindestens einem der aliphatischen C-Atome mindestens ein Fluoratom gebunden ist Bevorzugt weist Rf mindestens 2 aliphatische Kohlenstoffatome auf, an die mindestens ein Fluoratom gebunden ist. In Formel (II) ist Rf vorzugsweise eine fluorierte Alkylgruppe, z.B. mit 3 bis 20 C-Atomen und Beispiele sind CF₃CH₂CH₂, C₂F₅CH₂CH₂, n-C₆F₁₃CH₂CH₂, i-C₃F₇OCH₂CH₂CH₂, n-C₈F₁₇CH₂CH₂ und n-C₁₀F₂₁-CH₂CH₂. Ein Beispiel für Rf ist 1H,1H,2H,2H-Perfluoroctyl, z.B. ist 1H,1H,2H,2H-Perfluoroctyltriethoxysilan (FTS) gut geeignet.

Alternativ kann eine organische Fluor-haltige Verbindung, z.B. Perfluorethen, die mit Alkoxysilan modifiziert ist, eingesetzt werden. Auch ist diesem Fall enthält die fluorhaltige Beschichtungszusammensetzung ein Hydrolysat oder Kondensat einer hydrolysierbaren Siliciumverbindung. Die fluorhaltige Beschichtungszusammensetzung enthält somit bevorzugt ein Hydrolysat oder Kondensat einer hydrolysierbaren Siliciumverbindung, wobei das Hydrolysat oder Kondensat fluorhaltige Gruppen enthält, die an Siliciumatome des Hydrolysats oder Kondensats gebunden sind, oder eine organische Fluorverbindung mit dem Hydrolysat oder Kondensat modifiziert ist. Die organische Fluorverbindung kann ein Oligomer sein
Es folgen nähere Erläuterungen zu den geeigneten Silanen der Formel (I) Soweit nicht anders angegeben gelten diese Angaben für die Silane der Formel (I), die in den Beschichtungszusammensetzungen der Grundschicht, der Deckschicht und der Antihaftschicht eingesetzt werden, gleichermaßen.

Unter den obigen Silanen der allgemeinen Formel (I) befindet sich mindestens ein Silan, in dessen allgemeiner Formel n den Wert 1 oder 2 aufweist. In der Regel werden mindestens zwei Silane der allgemeinen Formel (I) in Kombination eingesetzt oder im Fall der Antihaftschicht ein Silan der Formel (I) und ein Silan der Formel (II). In diesen Fällen werden diese Silane bevorzugt in einem solchen Verhältnis eingesetzt, dass der Durchschnittswert von n (auf molarer Basis) 0,2 bis 1,5, vorzugsweise 0,5 bis 1,0, beträgt. Besonders bevorzugt ist ein Durchschnittswert von n im Bereich von 0,6 bis 0,8.

In der allgemeinen Formel (I) sind die Gruppen X, die gleich oder verschieden voneinander sind, hydrolysierbare Gruppen oder Hydroxylgruppen. Konkrete Beispiele für hydrolysierbare Gruppen X sind Halogenatome (insbesondere Chlor und Brom), Cyanate und Isocyanate, Alkoxygruppen und Acyloxygruppen mit bis zu 6 Kohlenstoffatomen. Besonders bevorzugt werden Alkoxygruppen, insbesondere C1-4-Alkoxygruppen wie Methoxy, Ethoxy, n-Propoxy und i-Propoxy. Vorzugsweise sind die Gruppen X in einem Silan identisch, wobei besonders bevorzugt Methoxy- oder Ethoxygruppen eingesetzt werden

Bei den Gruppen R in der allgemeinen Formel (I), die im Falle von n = 2 gleich oder identisch sein können, handelt es sich um Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen Konkrete Beispiele für derartige Gruppen sind Methyl, Ethyl, n-Propyl, i-Propyl, n-Butyl, sek.-Butyl und tert.-Butyl, Vinyl, Allyl und Propargyl, Phenyl, Tolyl und Benzyl, Die Gruppen können übliche Substituenten aufweisen, vorzugsweise tragen derartige Gruppen aber keinen Substituenten. Bevorzugte Gruppen R sind Alkylgruppen mit 1 bis 4 Kohlenstoffatomen, insbesondere Methyl und Ethyl, sowie Phenyl.

Erfindungsgemäß bevorzugt ist es, wenn mindestens zwei Silane der allgemeinen Formel (I) eingesetzt werden, wobei in einem Fall n = 0 und im anderen Fall n = 1 ist. Derartige Silan-Mischungen umfassen zum Beispiel mindestens ein Alkyltrialkoxysilan (z.B. (M)ethyltri(m)ethoxysilan) und ein Tetraalkoxysilan (z B Tetra-(m)ethoxysilan), die vorzugsweise in einem solchen Verhältnis eingesetzt werden, dass der Durchschnittswert von n in den oben angegebenen bevorzugten Bereichen liegt. Eine besonders bevorzugte Kombination für die Ausgangssilane der Formel (I) ist Methyltri(m)ethoxysilan und Tetra(m)ethoxysilan, die vorzugsweise in einem solchen Verhältnis eingesetzt werden, dass der Durchschnittswert von n in den oben angegebenen bevorzugten Bereichen liegt. Eine besonders bevorzugte Kombination für die Ausgangssilane der Formel (I) ist Methyltri(m)ethoxysilan und Tetra(m)ethoxysilan.

Die Hydrolyse und Kondensation der hydrolysierbaren Ausgangsverbindungen erfolgt bevorzugt nach dem Sol-Gel-Verfahren. Beim Sol-Gel-Verfahren werden die hydrolysierbaren Verbindungen mit Wasser, gewöhnlich in Gegenwart von sauren oder basischen Katalysatoren hydrolysiert und zumindest teilweise kondensiert Die saure Hydrolyse und Kondensation erfolgt bevorzugt in Gegenwart saurer Kondensationskatalysatoren (z.B. Salzsäure, Phosphorsäure oder Ameisensäure) z.B. bei einem pH-Wert von vorzugsweise 1 bis 3. Die Herstellung der Beschichtungszusammensetzung für die Deckschicht erfolgt vorzugsweise mittels saurer Katalyse Das sich bildende Sol kann durch geeignete Parameter, z.B. Kondensationsgrad, Lösungsmittel oder pH-Wert, auf die für die Beschichtungszusammensetzung gewünschte Viskosität eingestellt werden

Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Die Hydrolyse und Polykondensation des oder der Silane der allgemeinen Formel (I) wird im Falle der Grundschicht bevorzugt in Anwesenheit mindestens einer Verbindung aus der Gruppe der Alkoxide, Oxide, Hydroxide oder löslichen oder thermisch bei Temperaturen bis zu 400°C zersetzbaren Verbindungen der Alkali- und Erdalkalimetalle durchgeführt. Bei diesen Verbindungen handelt es sich vorzugsweise um solche von Li, Na, K, Cs, Mg, Ca und/oder Ba. Vorzugsweise werden Alkalimetalle, insbesondere Na und/oder K verwendet. Bei Verwendung einer Alkalimetallverbindung wird dieses vorzugsweise in einer solchen Menge eingesetzt, dass das Atomverhältnis Si : Alkalimetall im Bereich von 20:1 bis 7:1, insbesondere von 15:1 bis 10:1, liegt In jedem Fall wird das Atomverhältnis von Silicium zu (Erdalkalimetall und Alkalimetall) so groß gewählt, dass der resultierende Überzug nicht wasserlöslich ist wie beispielsweise im Falle von Wasserglas. Das Atomverhältnis Si: (Alkalimetall und/oder Erdalkalimetall) bezieht auf die Gesamtsumme der vorhandenen Alkalimetalle und Erdalkalimetalle bzw Alkalimetallionen und Erdalkalimetallionen. Wenn z.B. kein Erdalkalimetall vorhanden ist, bezieht sich die Summe naturgemäß nur auf die vorhandenen Alkalimetallatome bzw.- ionen.

Die gegebenenfalls zusätzlich zu den hydrolysierbaren Silanen der allgemeinen Formel (I) verwendeten nanoskaligen SiO₂-Teilchen werden vorzugsweise in einer solchen Menge eingesetzt, dass das Verhältnis aller Si-Atome in den Silanen der allgemeinen Formel (I) zu allen Si-Atomen in den nanoskaligen SiO2-Teilchen im Bereich von 5:1 bis 1:2, insbesondere 3:1 bis 1:1, liegt

Unter nanoskaligen SiO₂-Teilchen werden SiO₂-Teilchen mit einer durchschnittlichen Teilchengröße (bzw einem durchschnittlichen Teilchendurchmesser) von vorzugsweise nicht mehr als 100 nm, bevorzugter nicht mehr als 50 nm und insbesondere nicht mehr als 30 nm verstanden. Hierfür können z.B. auch handelsübliche Kieselsäureprodukte, z.B. Kieselsole, wie die Levasile®, Kieselsole der Bayer AG, oder pyrogene Kieselsäuren, z.B. die Aerosil-Produkte von Degussa, verwendet werden. Ebenso können Kieselsole in alkoholischen Lösemitteln, wie sie zum Beispiel von Nishin Chemicals angeboten werden, verwendet werden Die teilchenförmigen Materialien können in Form von Pulvern und Solen zugesetzt werden Sie können aber auch in situ bei der Hydrolyse und Polykondensation der Silane gebildet werden

Die Hydrolyse und Polykondensation der Silane können in Abwesenheit oder Anwesenheit eines organischen Lösungsmittels durchgeführt werden. Vorzugsweise ist kein organisches Lösungsmittel vorhanden. Bei Einsatz eines organischen Lösungsmittels sind die Ausgangskomponenten vorzugsweise im Reaktionsmedium (das in der Regel Wasser einschließt) löslich. Als organische Lösungsmittel eignen sich insbesondere mit Wasser mischbare Lösungsmittel wie beispielsweise ein- oder mehrwertige aliphatische Alkohole (wie beispielsweise Methanol, Ethanol), Ether (wie beispielsweise Diether), Ester (wie beispielsweise Ethylacetat), Ketone, Amide, Sulfoxide und Sulfone. Im übrigen können die Hydrolyse und Polykondensation gemäß den dem Fachmann geläufigen Modalitäten durchgeführt werden.

Die gegebenenfalls zugesetzten, thermisch zu oxidischen Komponenten reagierenden Verbindungen von B, Al, Si, Ge, Sn, Y, Ce, Ti oder Zr oder der Übergangsmetalle Fe, Co, Ni, Cu, Zn, Nb oder Ta können in Form von löslichen Alkoxiden, oder löslichen, sich z.B. bei Temperaturen bis zu 100°C sich zersetzenden Verbindungen, wie z.B. Salze organischer Säuren eingesetzt werden. Beispiele dafür sind Acetate, Formiate, Propinate oder Oxalate, aber auch alle anderen organischen Säuren, die im Reaktionsmedium löslich sind. Darüber hinaus kommen die Literatur bekannten Beispiele von leicht zersetzbaren Nitraten infrage.

Die im Falle der Antihaftschicht eingeführte organische Gruppe Rf in der Formel (II) weist vorzugsweise mindestens 3, bevorzugt mindestens 4 und insbesondere mindestens 5 aliphatische Kohlenstoffatome auf, an die mindestens ein und bevorzugt mindestens 2 Fluoratome gebunden sind. Vorzugsweise handelt es sich bei diesen Gruppen Rf um teilweise fluorierte Alkyl,- und/oder Alkenylgruppen. Weitere konkrete Beispiele sind z.B. in DE 19544763 beschrieben, worauf hiermit Bezug genommen wird.

Als in der Deckschicht einzusetzende oxidische Pigmente kommen farbgebende handelsübliche Pigmente in Frage, wie zum Beispiel Spinelle, insbesondere Aluminium-Spinelle, Oxide von Übergangsmetallen wie Eisen, Kobalt oder
Nickel, aber auch Mischungen von denselben Zusätzlich können auch noch Ruße zur Farbvertiefung eingesetzt werden.

Als Effektpigmente kommen so genannte interferenz-Pigmente mit oxidischer Zusammensetzung infrage. Hierfür kommen alle handelsüblichen Effektpigmente infrage, wie zum Beispiel die Iriodin®-Pigmente der Firma Merck

Zur Herstellung einer agglomeratfreien Dispersion werden gegebenenfalls handelsübliche Oberflächenmodifikatoren, wie zum Beispiel funktionelle Silane oder chelatbildende Komplexbildender mit geeigneten funktionellen Gruppen eingesetzt Beispiele für Silane sind die Epoxysilane zur Erzeugung hydrophiler Oberflächen, oder Alkylalkoxysilane zur Erzeugung hydrophober Oberflächen. Beispiele für chelatbildende Komplexbildender sind zum Beispiel ß-Diketone.

Die Herstellung einer pigmentierten Beschichtungszusammensetzung erfolgt bevorzugt durch die Hydrolyse und Kondensation der hydrolysierbaren Ausgangsverbindungen für die oxidische Matrix, insbesondere der Silane, in Gegenwart der agglomeratfrei dispergierten Pigmente, und bei der Beschichtungszusammensetzung der Grundschicht in Gegenwart der Alkali- und/oder Erdalkaliverbindungen

Es folgen weitere Erläuterungen zur Zusammensetzung der Beschichtungszusammensetzung z.B bezüglich weiterer möglicher Additive und damit verbundener Verfahrensschritte, z.B. Auftrag und Trocknung. Soweit nicht anders angegeben gelten diese Angaben jeweils gleichermaßen für die Beschichtungszusammensetzungen der Grundschicht, der Deckschicht und der Antihaftschicht und den damit verbundenen Verfahrensschritten.

Die erfindungsgemäß eingesetzten Beschichtungszusammensetzungen können in der Lackierungsindustrie übliche Additive enthalten, z.B. die Rheologie und das Trocknungsverhalten kontrollierende Additive, Benetzungs- und Verlaufshilfsmittel, Entschäumer, Lösungsmittel, Farbstoffe und Pigmente. Als Lösungsmittel eignen sich z.B. Alkohole und/oder Glycole, beispielsweise ein Gemisch aus Ethanol, Isopropanol und Butylglycol. Ferner können handelsübliche Mattierungsmittel, z.B. mikroskalige SiO₂- oder keramische Pulver zugesetzt werden, um mattierte Schichten mit Anti-Fingerprint-Eigenschaften zu erreichen. Sofern eingesetzt, können die Hydrolyse und Polykondensation der Silane in Anwesenheit von Mattierungsmitteln, z.B. mikroskaligen SiO₂- oder keramischen Pulvern erfolgen. Diese können aber auch später zur Beschichtungszusammensetzung zugegeben werden.

Die erfindungsgemäß eingesetzte Beschichtungszusammensetzung kann nach üblichen Beschichtungsmethoden auf die metallische Oberfläche bzw. auf die bereits aufgebrachte Grund- bzw. Deckschicht aufgebracht werden. Anwendbare Techniken sind zum Beispiel das Tauchen, Gießen, Fluten, Schleudern, Sprühen, Aufstreichen oder der Siebdruck. Besonders bevorzugt werden automatisierte Beschichtungsverfahren wie Flachspritzen, Einsatz von Sprührobotern und automatisches Sprühen mit maschinell geführten rotierenden oder schwenkenden Substraten. Dabei können zum Verdünnen übliche Lösungsmittel, wie sie in der Lackierungsindustrie gebräuchlich sind, verwendet werden.

Die auf die metallische Oberfläche oder auf die Grund- bzw. Deckschicht aufgetragene Beschichtungszusammensetzung kann z.B. bei Raumtemperatur bzw. leicht erhöhter Temperatur, z.B. einer Temperatur von bis zu 100°C, insbesondere bis zu 80°C, getrocknet werden, bevor sie thermisch zu einer glas-, glaskeramik- oder keramikartigen Schicht verdichtet wird. Die thermische Verdichtung kann gegebenenfalls auch durch IR- oder Laser-Strahlung erfolgen.

Besonders bevorzugte Auftragverfahren für die Beschichtungszusammensetzungen sind Sprüh-Coating, Druckverfahren und sonstige wie z.B. Siebdruck, Walzenauftrag, Flexoporint, Tampon-Druck, Inkjet, Tauch-Verfahren. Für die Abfolge der thermischen Verdichtung sind folgende Alternativen besonders zweckmäßig: 1) Auftragen der Zusammensetzung für die Deckschicht, Einbrennen der Grundschicht, Auftragen der Zusammensetzung für die Deckschicht mit anschließendem Einbrennen; oder 2) Auftragen der Zusammensetzung für die Deckschicht, Antrocknen, Auftragen der Zusammensetzung für die Deckschicht und anschließendes gemeinsames Einbrennen beider Schichten.

Für die Trocknung bzw. Vortrocknung der aufgetragenen Beschichtungszusammensetzungen eignen sich z.B. Infrarot, Wärme oder für nichtmetallische Substrate auch Erwärmung mittels Mikrowelle. Die thermische Verdichtung kann z.B durch Erwärmen in Batchöfen, Durchlauföfen oder Herdwagenöfen erfolgen. Die thermische Verdichtung bzw das Einbrennen kann unter verschiedenen Atmosphären durchgeführt werden, z.B.. unter Luft, unter Stickstoff, oder unter reduzierenden Bedingungen, z.B. Formiergas.

Die fluorhaltigen Antihaftschicht kann z.B. bevorzugt durch Sprühen, Tauchen oder Aufreiben aufgetragen werden. Die Antihaftschicht wird bevorzugt ebenfalls thermisch verdichtet, das Einbrennen der Antihaftschicht kann z.B. bei Temperaturen zwischen 200 und 400°C durchgeführt werden Bei dem erfindungsgemäßen Verfahren kann zwischen der Grundschicht und der Deckschicht ein Haftvermittler aufgetragen werden.

Im zweiten Schritt wird auf die Grundschicht die vorzugsweise glasartige Deckschicht aufgebracht, die im Wesentlichen frei von Alkali- und/oder Erdalkaliionen ist. Eine derartige vorzugsweise glasartige Schicht kann auf der erfindungsgemäß hergestellte, vorzugsweise glasartige und vorzugsweise pigmentierte Schicht dadurch vorgesehen werden, dass man die erfindungsgemäß auf die metallische Oberfläche aufgebrachte Grundschicht vor der thermischen Verdichtung und vorzugsweise nach Trocknung bei Raumtemperatur oder erhöhter Temperatur mit der Beschichtungszusammensetzung für die glasartige Schicht versieht und die beiden Überzüge dann gemeinsam thermisch verdichtet.

Die metallische Oberfläche erhält erfindungsgemäß eine witterungsbeständige, korrosionsinhibierende, kratzunempfindliche, alkaliresistente und spülmaschinenfeste Schutzschicht, die insbesondere auch Verschmutzungen, z.B. durch Fingerabdrücke, Wasser, Öl, Fett, Tenside und Staub, vermeiden hilft

Beispiele für Gegenstände mit metallischen Oberflächen, die besonders geeignet sind für die erfindungsgemäße Beschichtung sind metallische Bauteile für Bauwerke und Teile davon, wie z B Fassadenplatten aus Stahl, Edelstahl, Aluminium und Aluminiumlegierungen; Fortbewegung und Transportmittel und Teile davon; Gerätschaften, Vorrichtungen und Maschinen für gewerbliche bzw. industrielle Zwecke und Forschung sowie Teile davon; Haushaltsgegenstände und Arbeitsgerätschaften für den Haushalt sowie Teilen davon; Elektro- und Kochgeräte, Kochgeschirr, Behältnisse Bestecke und Teile davon, Geräte und Hilfsmittel für Spiel, Sport und Freizeit und Teile davon sowie Geräte, Hilfsmittel und Vorrichtungen für medizinische Zwecke und Kranke. Darüber hinaus eignen sich die Beschichtungen auf zum Auftrag in analoger Weise auf keramische oder Glasoberflächen.

Konkrete Beispiele für derartige beschichtungsfähige Materialien bzw Gegenstände als Substrat werden im Folgenden angegeben. Bevorzugt handelt es sich bei den zu beschichteten Oberflächen um metallische Oberflächen aus Stahl oder Edelstahl.

### Bauwerke (insbesondere Gebäude) und Teile davon:

Innen- und Außenfassaden von Gebäuden, Fußböden und Treppen, Fahrtreppen, Aufzüge, z.B. deren Wände, Treppengeländer, Möbel, Verkleidungen, Beschläge, Türen, Griffe (insbesondere mit Anti-Fingerprint-Ausrüstungen, z.B Türgriffe), Fassadenbleche, Bodenbeläge, Fenster (insbesondere Fensterrahmen, Fensterbänke und Fenstergriffe), Jalousien, Armaturen in Küche, Bad und WC, Duschkabinen, Sanitärzeilen, WC-Kabinen, allgemein Gegenstände im Sanitärbereich (z.B. Toiletten, Waschbecken, Armaturen, Accessoires), Rohre (und insbesondere Abflussrohre), Heizkörper, Lichtschalter, Lampen, Beleuchtung, Briefkästen, Geldautomaten, Infoterminals, seewasserfeste Beschichtung für die Ausrüstung von Hafenanlagen, Dachrinnen, Regenrinnen, Antennen, Satellitenschüsseln, Handläufe von Geländern und Rolltreppen, Öfen, Windkraftanlagen, insbesondere Rotorblätter, Denkmäler, Skulpturen und allgemein Kunstwerke mit metallischen Oberflächen, insbesondere solche, die im Freien aufgestellt sind

### Haushaltsgegenstände und Gerätschaften für den Haushalt sowie Teile davon:

Mülleimer, Geschirr und Kochgeschirr (z.B. aus Edelstahl, Aluminium, Aluminiumlegierungen und Sandwich-Metalle, insbesondere dreilagig mit einem Kern aus Aluminium oder Aluminiumlegierungen und außen mit anderen Metallen, wie z.B. Edelstahl), Bestecke (z.B. Messer), Tabletts, Pfannen, Töpfe, Backformen, Kochutensilien (z.B. Raspeln, Knoblauchpressen sowie Halterungen), Aufhängevorrichtungen, Kühlschränke, Kochfeldrahmen, Kochmulden, Heizplatten, Warmhalteflächen, Backöfen (innen und außen), Eierkocher, Mikrowellengeräte, Wasserkocher, Grillroste, Dampfgare, Öfen, Arbeitsflächen, Armaturen im Küchenbereich, Dunstabzugshauben, Blumenvasen, Gehäuse von TV-Geräten und Stereo-Anlagen, Gehäuse von (elektrischen) Haushaltsgeräten, Blumenvasen, Christbaumkugeln, Möbel, Möbelfronten aus Edelstahl, Spülen, Lampen und Leuchten

### Fortbewegungs- und Transportmittel (z.B. Pkw, Lkw, Omnibus, Motorrad, Moped, Fahrrad, Eisenbahn, Straßenbahn, Schiff und Flugzeug) und Teile davon:

Schutzbleche von Fahrrädern und Motorrädern, Instrumente von Motorrädern, Türgriffe, Lenkräder, Reifenfelgen, Auspuffanlagen bzw. -rohre, temperaturbelastete Teile (Motorteile, Verkleidungen, Ventile und Ventildeckel), Beschläge, Latentwärmetauscher, Kühler, Teile der Innenausstattung mit metallischer Oberfläche (z.B. als Kratzfestbeschichtung), Tankstutzen, Gepäckträger, Dachcontainer für Pkws, Anzeigeinstrumente, Tankwagen, z.B. für Milch, Öl oder Säure, und allgemein sämtliche Karosserieteile sowie seewasserfeste Beschichtung für die Ausrüstung von Schiffen und Booten.

### Arbeitsgerätschaften, Vorrichtungen und Maschinen (z.B. aus dem Anlagenbau (chemische Industrie, Lebensmittelindustrie, Kraftwerksanlagen) und der Energietechnik) für gewerbliche bzw industrielle Zwecke und Forschung sowie Teile davon:

Wärmetauscher, Verdichterräder, Spaltwendeltauscher, Cu-Elemente zur industriellen Heizung, Formen (z.B. Gießformen, insbesondere aus Metall), Schütttrichter, Einfüllanlagen, Extruder, Wasserräder, Walzen, Transportbänder, Druckmaschinen, Siebdruckschablonen, Abfüllmaschinen, (Maschinen-)Gehäuse, Bohrköpfe, Turbinen, Rohre (innen und außen, insbesondere für Flüssigkeits- und Gastransport), Rührer, Rührkessel, Ultraschallbäder, Reinigungsbäder, Behälter, Transporteinrichtungen in Öfen, Innenauskleidung von Öfen zum Hochtemperatur-, Oxidations-, Korrosions- und Säureschutz, Gasflaschen, Pumpen, Reaktoren, Bioreaktoren, Kessel (z.B. Brennstoffkessel), Wärmetauscher (z B in der Lebensmittelprozesstechnik oder für (Biomasse-)festbrennstoffkessel), Abluftanlagen, Sägeblätter, Abdeckungen (z.B. für Waagen), Tastaturen, Schalter, Knöpfe, Kugellager, Wellen, Schrauben, Solarzellen, Solaranlagen, Werkzeuge, Werkzeuggriffe, Flüssigkeitsbehälter, Isolatoren, Kapillaren, Laboreinrichtungen (z.B. Chromatographiesäulen und Abzüge) und Teile von Elektroakkumulatoren und Batterien.

### Hilfsmittel für Spiel, Sport und Freizeit:

Gartenmöbel, Gartengeräte, Werkzeuge, Spielplatzgeräte (z.B Rutschen), Snowboards, Roller, Golfschläger, Hanteln, Gewichte, Trainingsgeräte, Beschläge, Sitzgelegenheiten in Parks, Spielplätzen, Einrichtungsgegenstände und Geräte in Schwimmbädern usw

### Geräte, Hilfsmittel und Vorrichtungen für medizinische Zwecke und Kranke:

Chirurgische Instrumente, Kanülen, medizinische Behälter, zahnmedizinische Geräte, Brillengestelle, medizinische Bestecke (für Operationen und Zahnbehandlungen), allgemein Gegenstände aus dem Bereich der Medizintechnik (z.B. Rohre, Apparate, Behälter) und Rollstühle, sowie ganz allgemein Krankenhauseinrichtungen
Neben den obigen Gegenständen können natürlich auch andere Gegenstände und Teile davon vorteilhaft mit den obigen Oberflächenschichten versehen werden, wie z.B. Spielzeuge, Schmuck oder Münzen.

Besonders bevorzugt sind alle möglichen Gegenstände im Haushaltsbereich (Kücheneinrichtungen aller Art, Kochgeschirr aller Art, Herd- Mikrowellen- und Grill-Muffeln, Grill-Platten und Grill-Roste, Verbrennungsanlagen, Lebensmitteltechnik, Chemietechnik und pharmazeutische Technik (Rohre, Behälter, Reaktoren), Sprühtrocknungs- und sonstige Trocknungsanlagen, Abgasanlagen aller Art, Industrieanlagen (Papierindustrie, zum Beispiel Walzen und Rollen), Wasser- und Abwasser-Aufbereitungsanlagen, Automobiltechnik (Abgasanlagen), keramische Industrie (Fliesen, Sanitär und sonstige keramische Oberflächen).

Die Erfindung eignet sich insbesondere für Behälter, insbesondere für Kochgeschirr. Dabei ist es bevorzugt, dass die erfindungsgemäße Schutzschicht auf der Innenseite oder einem Teil der Innenseite des Behälters angeordnet ist. Zusätzlich kann eine metallische Oberfläche der Außenseite oder eines Teils der Außenseite des Behälters mit einer zweite Schutzschicht versehen sein, die eine Grundschicht umfassend eine Matrix aus einem Alkali- und/oder Erdalkalisilikat, die mindestens ein Pigment enthält, und eine Deckschicht umfassend eine Matrix aus einem Alkali- und/oder Erdalkalisilikat, die bevorzugt einen Füllstoff, vorzugsweise einen abrasiven Füllstoff, z.B. einen plättchenförmigen Füllstoff, umfasst Die Grundschicht der äußeren Schutzschicht entspricht dabei in Aufbau und Zusammensetzung der Grundschicht der erfindungsgemäßen Schutzschicht, wobei es bevorzugt ist, das die Grundschicht der äußeren Schutzschicht ein katalytisch aktives Pigment enthält Die Deckschicht der äußeren Schutzschicht entspricht ebenfalls dem Aufbau der Grundschicht der erfindungsgemäßen Schutzschicht, wobei es bevorzugt ist, das die Deckschicht der äußeren Schutzschicht einen Füllstoff, d h weiße oder transparente Partikel, enthält. Als Pigmente und Füllstoffe können in der äußeren Schutzschicht dieselben eingesetzt werden, die für die erfindungsgemäße Schutzschicht beschrieben wurden Besonders geeignete Füllstoffe für die Deckschicht der äußeren Schutzschicht sind z.B Al₂O₃, SiO₂ und TiO₂ und insbesondere abrasive Füllstoffe, die z.B. eine Mohs-Härte von mindestens 7 aufweisen, z.B. plättchenförmiger Al₂O₃, plättchenförmiges SiO₂ und TiO₂. Außerdem können nicht-oxidische, hydrolysestabile abrasive Füllstoffe verwendet werden, z.B. Nitride wie BN und Carbide wie SiC.

Die folgenden Beispiele erläutern die Erfindung ohne sie zu beschränken.

### Beispiele

### A) Herstellung der Beschichtungssole

### A1a) Alkaliionen-haltige Grundschicht (nicht erfindungsgemäß)

750 ml Methyltriethoxysilan, 210 ml Tetraethoxysilan, 12 g NaOH und 16.8 g KOH werden in ein verschließbares Glasgefäß mit einem Rührer gegeben und intensiv gerührt. Dann wurden unter heftigem Rühren 96 ml destilliertes Wasser hinzugetropft. Anschließend wurde die Reaktionslösung eine weitere Stunde bei Raumtemperatur gerührt.

### A1b) Erdalkaliionen-haltige Grundschicht (nicht erfindungsgemäß)

415 mg Calcium wurden solange in wasserfreiem Ethanol unter Stickstoff gekocht, bis sich das Calcium aufgelöst hat. Zu der noch heißen Lösung von Calciumethoxid wurde eine Mischung aus 23,3g Methyltriethoxysilan, 6,5g Tetraethoxysilan und 3,34g Wasser in 3,34g Isopropanol gegeben, die vorher 30 Minuten unter Rückfluß gekocht wurde. Der Ansatz wurde 12 h bei RT gerührt.

### A1c) Alkaliionen-haltige Grundschicht mit Fe-Ionen-haltigem Schwarzpigment (erfindungsgemäß)

350g des Schwarzpigments PK 3097 (Ferro) werden in 500g Butylglykol unter Rühren vordispergiert. Anschließend wurde die Dispersion zu 2,5kg des Matrixsystems A1a) gegeben und 1 Stunde weitergerührt.

### A2) Alkaliionen-freie Deckschicht mit nanoskaligem Füllstoff

87,4g Methyltriethoxysilan, 25,0g Tetraethoxysilan wurden mit 27g Levasil® 300/30 versetzt und anschließend unter Rühren 820mg conc. HCl zugetropft. Nach 5 min Rühren erfolgte die Zugabe einer Mischung aus 29,1g Methyltriethoxysilan und 8,3g Tetraethoxysilan. Weitere 5 Minuten später wurden 18,5g Wasser zugesetzt und die Reaktionslösung 15 Minuten gerührt.

### A3a) Fluorhaltiges Topcoat I:

25 g Fluorlink S10 (Solvay) und 1,25 g TEOS werden in 465g Ethanol vorgelegt Unter intensivem Ruhren wurden 30mg Schwefelsäure zugetropft und das Gemisch anschließend 30 Minuten bei Raumtemperatur gerührt Anschließend wurde mit 1 kg Ethanol verdünnt.

### A3b) Fluorhaltiges Topcoat II mit nanoskaligem Füllstoff:

35 7 g (0.2 mol) Methyltriethoxysilan, 11 3 g (0 054 mol) Tetraethoxysilan und 20.0 g (0.1 mol SiO₂) Levasil® 300/30 wurden 5 Minuten gerührt Anschließend werden 0.4 g HCl (37 wt-%) zugetropft. Nach 30 Minuten werden 0 56 g (0.0071 mol) (3,3,4,4,5,5,6,6,7,7,8,8,8-tridecafluoroctyl)triethoxysilan zugegeben und weitere 30 Minuten gerührt. Anschließend wurden 140 g Isopropanol zugesetzt und 1.4 g Amberlyst A21. Nach 30 Minuten wurde der Ionenaustauscher abfiltriert.

### B) Auftragung und Aushärtung der Schichten

### B1) Grundschicht:

Die Grundschicht wurde mittels Nasssprühverfahren mit einer Nassfilmdicke von ca 15 µm aufgetragen und anschließend je nach verwendetem metallischem Substrat auf 450-550°C ausgeheizt

### B2) Deckschicht:

Die Deckschicht wurde mittels Nasssprühverfahren mit einer Nassfilmdicke von ca 10 µm aufgetragen und anschließend wurde je nach metallischem Substrat auf 450-550°C ausgeheizt

### B3) Fluorhaltiges Topcoat:

Die frisch hergestellte Lösung wird entweder auf das Substrat aufgerieben oder aufgesprüht. Die Aushärtung erfolgt bei 250-300°C.

### Bewertung

### Spülmaschinenbeständigkeit

Substrate (10 cm x 10 cm Edelstahlplättchen) versehen mit einer Doppelschicht bestehend aus Grundschicht gemäß A1a, b oder c und einer Deckschicht gemäß A2 (ohne fluorhaltiges Topcoat), die wie vorstehend beschrieben hergestellt wurden, wurden in einem Zeitraum von 12 Monaten dreimal pro Woche in einer herkömmlichen Spülmaschine (Typ: Siemens Serie IQ) unter Verwendung eines handelsüblichen Reinigungsmittels (compact tabs 3 in 1, aro) bei 65°C gewaschen.

Die Muster wurden bezüglich Optik und Haftung evaluiert Es lassen sich auch nach 12 Monaten weder mit dem Mikroskop noch mit dem Auge Defekte irgendeiner Art feststellen. Glanzgradmessungen ergeben, dass sich der Glanzgrad der Proben im Rahmen der Messungenauigkeit nicht verändert. Die Haftung ist auch nach 12 Monaten noch sehr gut (Gitterschnitt-Tape-Test: 0/0)

Zum Vergleich wurden Muster wie vorstehend beschrieben hergestellt, außer dass nur eine Schicht gemäß A1a, nur eine Schicht gemäß A1b, eine Doppelschicht bestehend aus zwei Schichten gemäß A1a oder eine Doppelschicht bestehend aus zwei Schichten gemäß A1b aufgebracht wurden Die Vergleichsbeispiele wurden wie oben beschrieben auf Spülmaschinenbeständigkeit geprüft

Es zeigt sich schon im Verlauf mehrerer Wochen folgende Fehlerbilder: Verlust des Glanzgrades (Eintrübung), punktuelle, mit dem Auge sichtbare Defekte und auch Ablösungen von Teilen der Schicht Die Schichten lassen sich teilweise mit einem Klebeband entfernen ohne Anbringung eines Gitterschnittes.

### Chemische Beständigkeit

Substrate (10 cm x 2 cm Edelstahlplättchen) versehen mit einer Doppelschicht bestehend aus Grundschicht gemäß A1a, b oder c und einer Deckschicht gemäß A2 (ohne fluorhaltiges Topcoat), die wie vorstehend beschrieben hergestellt wurden, wurden in einem Zeitraum von 24 h (1 Tag) bis zu 7 Tagen in Lösungen folgender Zusammensetzung gekocht (T = 100°C):
a) 10 %ige Zitronensäure
b) destilliertes Wasser
c) Bratensauce + Zusatz von Essig, Zucker, Ketchup, Senf, Marmelade. Wein

Es ergibt sich auch nach 7 Tagen keine Schädigung der Beschichtungen Optik und Haftung sind unverändert. Im Falle des destillierten Wassers wurde der Versuch auch unter Zusatz des pH-Indikators Phenolphthalein durchgeführt Das Wasser bleibt über den gesamten Zeitraum farblos

Die vorstehend beschriebenen Vergleichsbeispiele wurden in gleicher Weise auf chemische Beständigkeit geprüft. Es ergaben sich dabei im Zeitraum von 24-48 Stunden Dauerkochen folgende Fehlerbilder: irreversible Verfärbungen der Schichten, Verlust des Glanzgrades, punktuelle, teilweise oder komplette Ablösung der Beschichtung vom Substrat. Versuche mit Phenolphthalein-haltigem Wasser ergab je nach verwendetem Alkali- oder Erdalkaliion-Konzentration starke Violettfärbung des Wassers.

### Kochbeständigkeit/Antihafteigenschaften

Auf Substraten (30 cm x 20 cm Edelstahlplatten) versehen mit einer Doppelschicht bestehend aus Grundschicht gemäß A1a,b oder c und einer Deckschicht gemäß A2 (ohne fluorhaltiges Topcoat), die wie vorstehend beschrieben hergestellt wurden, wurden folgende Versuche bei 220°C - 300°C durchgeführt:
- Anbraten von Fisch, Fleisch, Ei, Pfannkuchen, Ketchup, Honig
- Einkochen einer 3% NaCl-Lösung bis zur Trockne
- Hochheizen der trockenen beschichteten Platte und dann Abschrecken mit kaltem Wasser

Es ergibt sich, dass alle Kochprozeduren durchgeführt werden können, ohne die Schichten zu beeinträchtigen, es lassen sich weder Ablösungen noch Defekte feststellen. Die Antihaftwirkung der Schichten ist vorhanden, die Platten können problemlos mit einem Küchentuch gereinigt werden Nur im Falle des Ei/Eiweiß zeigt sich eine gewisse Haftung, die allerdings durch leichtes Schaben mit einem Küchenutensil komplett entfernt werden kann Die beschichteten Flächen können mit metallischen Küchenhilfsmitteln (Löffel, Gabel, Schaber etc) bearbeitet werden, ohne dass Probleme auftreten.

Die vorstehend beschriebenen Vergleichsbeispiele wurden in gleicher Weise auf Kochbeständigkeit/Antihafteigenschaften geprüft. Es ergeben sich hierbei folgende Fehlerbilder: starkes Anhaften der Lebensmittel, insbesondere von Ei. Die Anhaftungen können nur unter Einsatz von Scheuerhilfsmitteln (Schwämme, abrasive Reiniger) wieder entfernt werden. Im Fall der Ei-Verunreinigungen führt die Reinigungsprozedur zu punktuellen Ablösungen der Schicht Die Einkoch- oder Abschreckversuche führen zur flächigen Ablösung der Schichten.

Ferner wurden Muster, welche entweder nur eine Schicht gemäß A2 (mit oder ohne Füllstoff) oder eine Doppelschicht bestehend aus Schichten gemäß A2 (mit oder ohne Füllstoff) enthalten, die wie vorstehend beschrieben hergestellt wurden getestet.

Es ergibt sich im Falle der Kochversuche bzw. des Eindampfexperimentes ein ähnlich gutes Resultat wie oben beschrieben. Es zeigt sich allerdings im Falle der Abschreckversuche, dass durch den thermischen Stress der schnellen und massiven Temperaturänderung punktuelle Defekte/Ablösungen auftreten können. Hinzukommt, dass in diesen Fällen aufgrund unzureichender Haftung auf dem Substrat eine leichtere Schädigung durch mechanische Hilfsmittel möglich ist. Klopfen mit der Rückseite eines Metalllöffels auf den Schichten führt zu punktuellen Abplatzungen.

Vergleichend wurden Substrate versehen mit einer Doppelschicht bestehend aus Grundschicht gemäß A1a und einer Deckschicht gemäß A2 und einem zusätzlichem fluorhaltigem Topcoat (gemäß A3a oder A3b), die wie vorstehend beschrieben hergestellt wurden, getestet. Es ergibt sich eine vorzügliche Antihaftwirkung für alle Lebensmittel Entweder haftet während des Kochens gar nichts an, oder Rückstände können durch fließendes kaltes Wasser entfernt werden Eindampf- und Abschreckversuche führen zu keiner optischen Beeinträchtigung.

## Patentansprüche

1. Gegenstand umfassend eine metallische Oberfläche, die mit einer glas-, glaskeramik- oder keramikartigen Schutzschicht versehen ist, wobei die Schutzschicht eine Grundschicht umfassend eine Matrix aus einem Alkali- und/oder Erdalkalisilikat und eine Alkalimetall- und Erdalkalimetall-freie Deckschicht umfassend eine Matrix aus einer oxidischen Siliciumverbindung umfasst, wobei die Grundschicht eine Schichtdicke von 1 bis 20 µm aufweist, **dadurch gekennzeichnet, dass** in der Grundschicht ein oder mehrere Pigmente ausgewählt aus einem Oxid von einem oder mehreren Elementen ausgewählt aus Al, Sn, Y, Ce, Ti, Zr, Fe, Co, Ni, Cu, Zn, Nb und Ta enthalten sind.

2. Gegenstand nach Anspruch 1, **dadurch gekennzeichnet, dass** in der Deckschicht ein oder mehrere Pigmente und/oder Füllstoffe enthalten sind.

3. Gegenstand nach Anspruch 2, **dadurch gekennzeichnet, dass** der Füllstoff oder das Pigment ein Oxid von einem oder mehreren Elementen ausgewählt aus den Elementen der Hauptgruppen III und IV und der Nebengruppen I bis V und VIII des Periodensystems der Elemente, insbesondere ausgewählt aus B, Al, Si, Ge, Sn, Y, Ce, Ti, Zr, Fe, Co, Ni, Cu, Zn, Nb und Ta, und/oder eine nichtoxidische Verbindung, insbesondere ausgewählt aus Verbindungen der Hauptgruppen III bis V, beispielsweise BN, SiC, Graphit oder Ruß, ist.

4. Gegenstand nach einem der Ansprüche 1 bis 3, **dadurch gekennzeichnet, dass** mindestens eines der Pigmente und/oder Füllstoffe plättchenförmig ist.

5. Gegenstand nach einem der Ansprüche 1 bis 4, **dadurch gekennzeichnet, dass** auf der Deckschicht eine fluorhaltige und Silicium-haltige Antihaftschicht aufgebracht ist.

6. Gegenstand nach einem der Ansprüche 1 bis 5, **dadurch gekennzeichnet, dass** das Atomverhältnis Si : (Alkalimetall und/oder Erdalkalimetall) in der Grundschicht im Bereich von 20:1 bis 7:1, insbesondere von 15:1 bis 10:1, liegt.

7. Gegenstand nach einem der Ansprüche 1 bis 6, **dadurch gekennzeichnet, dass** die Grundschicht und/oder die Deckschicht erhältlich ist nach einem Verfahren, bei dem eine nach dem Sol-Gel-Verfahren hergestellte Beschichtungszusammensetzung nasschemisch auf die metallische Oberfläche bzw. die Grundschicht aufgebracht und thermisch verdichtet wird.

8. Gegenstand nach einem der Ansprüche 1 bis 7, **dadurch gekennzeichnet, dass** der Gegenstand ein Behälter, bevorzugt ein Kochgeschirr, ist, wobei die Schutzschicht auf der Innenseite oder einem Teil der Innenseite des Behälters angeordnet ist.

9. Gegenstand nach Anspruch 8, **dadurch gekennzeichnet, dass** der Behälter auf einer metallischen Oberfläche der Außenseite oder eines Teils der Außenseite eine äußere Schutzschicht aufweist, die eine Grundschicht umfassend eine Matrix aus einem Alkali- und/oder Erdalkalisilikat, die bevorzugt mindestens ein Pigment enthält, und eine Deckschicht umfassend eine Matrix aus einem Alkali- und/oder Erdalkalisilikat, die mindestens einen Füllstoff, bevorzugt einen abrasiven Füllstoff, z.B. einen plättchenförmigen Füllstoff, umfasst.

10. Verfahren zur Herstellung einer glas-, glaskeramik- oder keramikartigen Schutzschicht, die eine Grundschicht und eine Deckschicht umfasst, auf einer metallischen Oberfläche eines Gegenstands, **dadurch gekennzeichnet, dass**
a) auf die metallische Oberfläche nasschemisch eine Beschichtungszusammensetzung, die ein Alkalisilikat und/oder ein Erdalkalisilikat enthält, aufgebracht und thermisch verdichtet wird, um die Grundschicht zu bilden, und
b) auf die Grundschicht nasschemisch eine Beschichtungszusammensetzung, die ein Alkalimetall- und Erdalkalimetall-freies Hydrolysat oder Kondensat von einem oder mehreren hydrolysierbaren Silanen umfasst, aufgebracht und thermisch verdichtet wird, um die Deckschicht zu bilden,
wobei die thermische Verdichtung zur Bildung der Grundschicht vor dem Auftrag der Beschichtungszusammensetzung für die Deckschicht oder danach zusammen mit der thermischen Verdichtung zur Bildung der Deckschicht erfolgen kann, und die Grundschicht eine Schichtdicke von 1 bis 20 µm aufweist, **dadurch gekennzeichnet, dass** in der Grundschicht ein oder mehrere Pigmente ausgewählt aus einem Oxid von einem oder mehreren Elementen ausgewählt aus Al, Sn, Y, Ce, Ti, Zr, Fe, Co, Ni, Cu, Zn, Nb und Ta enthalten sind.

11. Verfahren nach Anspruch 10, **dadurch gekennzeichnet, dass** die Beschichtungszusammensetzung für die Grundschicht und die Beschichtungszusammensetzung für die Deckschicht durch ein Sol-Gel-Verfahren hergestellt wird.

12. Verfahren nach Anspruch 10 oder Anspruch 11, **dadurch gekennzeichnet, dass** die aufgetragene und gegebenenfalls getrocknete Beschichtungszusammensetzung der Grundschicht und/oder der Deckschicht bei einer Temperatur im Bereich von 250 bis 700°C, bevorzugt 350 bis 600°C verdichtet wird.

13. Verfahren nach einem der Ansprüche 10 bis 12, **dadurch gekennzeichnet, dass**
a) die Beschichtungszusammensetzung der Grundschicht erhalten wird durch Hydrolyse und Polykondensation eines oder mehrerer Silane der allgemeinen Formel (I)
RₙSiX₄₋ₙ (I)
worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe das mindestens ein Silan mit n gleich 1 oder 2 verwendet wird, oder davon abgeleiteter Oligomere, in Anwesenheit von
mindestens einer Alkali- oder Erdalkalimetallverbindung, bevorzugt einer Verbindung aus der Gruppe der Oxide und Hydroxide und der organometallischen Verbindungen der Alkali- und Erdalkalimetalle, gegebenenfalls zugesetzten nanoskaligen SiO₂-Teilchen und/oder gegebenenfalls von Alkoxiden oder löslichen Verbindungen der Metalle B, Al, Si, Ge, Sn, Y, Ce, Ti oder Zr, und/oder
b) die Beschichtungszusammensetzung der Deckschicht erhalten wird durch Hydrolyse und Polykondensation eines oder mehrerer Silane der allgemeinen Formel (I):
RₙSiX₄₋ₙ (I)
worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 4 Kohlenstoffatomen und Aryl-, Aralkyl- und Alkarylgruppen mit 6 bis 10 Kohlenstoffatomen stehen und n 0, 1 oder 2 bedeutet, mit der Maßgabe das mindestens ein Silan mit n gleich 1 oder 2 verwendet wird, oder davon abgeleiteter Oligomere, gegebenenfalls in Anwesenheit von
zugesetzten nanoskaligen SiO₂-Teilchen und/oder
Alkoxiden oder löslichen Verbindungen der Metalle B, Al, Si, Ge, Sn, Y, Ce, Ti oder Zr, und/oder
c) die Beschichtungszusammensetzung der gegebenenfalls eingesetzten Antihaftschicht erhalten wird durch Hydrolyse und Polykondensation eines oder mehrerer Silane der allgemeinen Formel (II):
Rf(R)_{b}SiX_{(3-b)} (II)
worin X und R wie in der allgemeinen Formel (I) definiert sind, Rf eine nicht-hydrolysierbare Gruppe ist, die 1 bis 30 Fluoratome an aliphatische Kohlenstoffatome gebunden aufweist, und b 0, 1 oder 2 ist, und gegebenenfalls eines oder mehrerer Silane der allgemeinen Formel (I) wie vorstehend definiert, gegebenenfalls in Anwesenheit von zugesetzten nanoskaligen SiO₂-Teilchen und/oder
Alkoxiden oder löslichen Verbindungen der Metalle B, Al, Si, Ge, Sn, Y, Ce, Ti oder Zr, oder
durch Hydrolyse und Polykondensation eines oder mehrerer Silane der allgemeinen Formel (I), worin X und R wie vorstehend definiert sind und n 0 ist in Anwesenheit einer organischen Fluorverbindung.

14. Verfahren nach einem der Ansprüche 10 bis 13, **dadurch gekennzeichnet, dass** in der Beschichtungszusammensetzung für die Grundschicht das Atomverhältnis Si : (Alkalimetall und/oder Erdalkalimetall) im Bereich von 20:1 bis 7:1, insbesondere von 15:1 bis 10:1, liegt.

15. Verfahren nach einem der Ansprüche 10 bis 14, **dadurch gekennzeichnet, dass** die Beschichtungszusammensetzung der Deckschicht Pigmente und/oder Füllstoffe enthält.

16. Verfahren nach einem der Ansprüche 10 bis 15, **dadurch gekennzeichnet, dass** auf die Deckschicht eine fluorhaltige Beschichtungszusammensetzung aufgetragen und thermisch eingebrannt wird, um eine Antihaftschicht zu bilden, wobei die fluorhaltige Beschichtungszusammensetzung ein Hydrolysat oder Kondensat einer hydrolysierbaren Siliciumverbindung umfasst.

## Claims

1. An article comprising a metal surface provided with a glass-, glass-ceramic- or ceramic-type protective layer, wherein the protective layer comprises a base layer comprising a matrix of an alkali and/or alkaline earth silicate and a top layer which is free of alkali metals and alkaline earth metals and comprises a matrix of an oxidic silicon compound, wherein the base layer has a layer thickness of 1 to 20 µm, **characterized in that** the base layer contains one or more pigments selected from an oxide of one or more elements selected from Al, Sn, Y, Ce, Ti, Zr, Fe, Co, Ni, Cu, Zn, Nb and Ta.

2. The article of claim 1, **characterized in that** the top layer contains one or more pigments and/or fillers.

3. The article of claim 2, **characterized in that** the filler or the pigment is an oxide of one or more elements selected from the elements of main groups III and IV and of subgroups I to V and VIII of the Periodic Table of the Elements, in particular selected from B, Al, Si, Ge, Sn, Y, Ce, Ti, Zr, Fe, Co, Ni, Cu, Zn, Nb and Ta, and/or a non-oxidic compound, in particular selected from compounds of main groups III to V, such as BN, SiC, graphite or carbon black.

4. The article of one claims 1 to 3, **characterized in that** at least one of the pigments and/or fillers is platelet-shaped.

5. The article of one claims 1 to 4, **characterized in that** a fluorine containing and silicon containing anti-adhesive layer is provided on the top layer.

6. The article of one claims 1 to 5, **characterized in that** the atomic ratio of Si:(alkali metal and/or alkaline earth metal) in the base layer is in the range of from 20:1 to 7:1, in particular 15:1 to 10:1.

7. The article of one claims 1 to 6, **characterized in that** the base layer and/or the top layer is obtainable by a method in which a coating composition prepared by the sol-gel process is wet chemically applied to the metal surface or the base layer respectively, and thermally densified.

8. The article of one claims 1 to 7, **characterized in that** the article is a container, preferably a cookware, wherein the protective layer is disposed on an inside or on a part of an inside of the container.

9. The article of claim 8, **characterized in that** the container has, on a metal surface of an outside or on a part of an outside, an outer protective layer comprising a base layer comprising a matrix of an alkali and/or alkaline earth silicate, preferably comprising at least one pigment, and a top layer comprising a matrix of an alkali and/or alkaline earth silicate which comprises at least one filler, preferably an abrasive filler such as a platelet-shaped filler.

10. A method of preparing a glass-, glass-ceramic- or ceramic-type protective layer comprising a base layer and a top layer on a metal surface of an article, **characterized in that**
a) a coating composition comprising an alkali silicate and/or an alkaline earth silicate is wet-chemically applied on the metal surface and thermally densified to form the base layer, and
b) a coating composition comprising an alkali and alkaline earth metal-free hydrolysate or condensate of one or more hydrolyzable silanes is wet-chemically applied on the base layer and thermally densified to form the top layer,
wherein the thermal densification to form the base layer can be effected before application of the coating composition for the top layer or thereafter together with the thermal densification to form the top layer, and the base layer has a layer thickness of 1 to 20 µm, **characterized in that** the base layer contains one or more pigments selected from an oxide of one or more elements selected from Al, Sn, Y, Ce, Ti, Zr, Fe, Co, Ni, Cu, Zn, Nb and Ta.

11. The method of claim 10, **characterized in that** coating composition for the base layer and the coating composition for the top layer are prepared by a sol-gel process.

12. The method of claim 10 or claim 11, **characterized in that** the applied and optionally dried coating composition for the base layer and/or the top layer is densified at a temperature in a range of from 250 to 700 °C, preferably 350 to 600 °C.

13. The method of one of claims 10 to 12, **characterized in that**
a) the coating composition of the base layer is obtained by hydrolysis and polycondensation of one or more silanes of general formula (I):
RₙSiX₄₋ₙ (I)
wherein the groups X, identical or different from each other, are hydrolyzable groups or hydroxyl groups, the groups R, identical or different from each other, are hydrogen, alkyl, alkenyl and alkynyl groups having up to 4 carbon atoms and aryl, aralkyl and alkaryl groups having 6 to 10 carbon atoms, and n is 0, 1 or 2, provided that at least one silane with n equal to 1 or 2 is used, or oligomers derived therefrom, in the presence of
at least one alkali or alkaline earth metal compound, preferably a compound from the group of the oxides and hydroxides and of the organometallic compounds of the alkali or alkaline earth metals, optionally added nanoscale SiO₂ particles and/or
optionally alkoxides or soluble compounds of the metals B, Al, Si, Ge, Sn, Y, Ce, Ti or Zr, and/or
b) the coating composition of the top layer is obtained by hydrolysis and polycondensation of one or more silanes of general formula (I):
RₙSiX₄₋ₙ (I)
wherein the groups X, identical or different from each other, are hydrolyzable groups or hydroxyl groups, the groups R, identical or different from each other, are hydrogen, alkyl, alkenyl and alkynyl groups having up to 4 carbon atoms and aryl, aralkyl and alkaryl groups having 6 to 10 carbon atoms, and n is 0, 1 or 2, provided that at least one silane with n equal to 1 or 2 is used, or oligomers derived therefrom, optionally in the presence of
added nanoscale SiO₂ particles and/or
alkoxides or soluble compounds of the metals B, Al, Si, Ge, Sn, Y, Ce, Ti or Zr, and/or
c) the coating composition for the optionally used anti-adhesive layer is obtained by hydrolysis and polycondensation of one or more silanes of general formula (II):
Rf(R)_{b}SiX_{(3-b)} (II)
wherein X and R are as defined in general formula (I), Rf is a non-hydrolyzable group having 1 to 30 fluorine atoms bound to aliphatic carbon atoms, and b is 0, 1 or 2, and
optionally one or more silanes of general formula (I) as defined above, optionally in the presence of
added nanoscale SiO₂ particles and/or alkoxides or soluble compounds of the metals B, Al, Si, Ge, Sn, Y, Ce, Ti or Zr, or
by hydrolysis and polycondensation of one or more silanes of general formula (I) wherein X and R are as defined above and n is 0 in the presence of an organic fluorine compound.

14. The method of one of claims 10 to 13, **characterized in that** in the coating composition for the base layer the atomic ratio of Si:(alkali metal and/or alkaline earth metal) is in the range of from 20:1 to 7:1, in particular from 15:1 to 10:1.

15. The method of one of claims 10 to 14, **characterized in that** the coating composition for the top layer contains pigments and/or fillers.

16. The method of one of claims 10 to 15, **characterized in that** a fluorine containing coating composition is applied on the top layer and thermally baked to form an anti-adhesive layer, wherein the fluorine containing coating composition comprises a hydrolysate or condensate of a hydrolyzable silicon compound.

## Revendications

1. Objet comprenant une surface métallique dotée d'une couche protectrice en verre, vitrocéramique ou de type céramique, la couche protectrice comprenant une couche de base comportant une matrice d'un silicate alcalin et/ou alcalino-terreux et une couche de recouvrement exempte de métal alcalin et/ou alcalino-terreux comportant une matrice d'un composé d'oxyde de silicium, la couche de base présentant une épaisseur de 1 à 20 µm, **caractérisé en ce qu'**un ou plusieurs pigments choisis parmi un oxyde d'un ou de plusieurs éléments choisis parmi Al, Sn, Y, Ce, Ti, Zr, Fe, Co, Ni, Cu, Zn, Nb et Ta sont présents dans la couche de base.

2. Objet selon la revendication 1, **caractérisé en ce qu'**un ou plusieurs pigments et/ou charges sont présents dans la couche de recouvrement.

3. Objet selon la revendication 2, **caractérisé en ce que** la charge ou le pigment est un oxyde d'un ou de plusieurs éléments choisis parmi les éléments des groupes principaux III et IV et des sous-groupes I à V et VIII du système périodique des éléments, en particulier choisis parmi B, Al, Si, Ge, Sn, Y, Ce, Ti, Zr, Fe, Co, Ni, Cu, Zn, Nb et Ta, et/ou un composé qui n'est pas un oxyde, en particulier choisi parmi les composés des groupes principaux III à V, par exemple BN, SiC, graphite ou suie.

4. Objet selon l'une des revendications 1 à 3, **caractérisé en ce qu'**au moins un des pigments et/ou charges est lamellaire.

5. Objet selon l'une des revendications 1 à 4, **caractérisé en ce qu'**une couche anti-adhérente contenant du fluor et du silicium est déposée sur la couche de recouvrement.

6. Objet selon l'une des revendications 1 à 5, **caractérisé en ce que** le rapport atomique Si:(métal alcalin et/ou métal alcalino-terreux) dans la couche de base se situe dans la plage de 20:1 à 7:1, en particulier de 15:1 à 10:1.

7. Objet selon l'une des revendications 1 à 6, **caractérisé en ce que** la couche de base et/ou la couche de recouvrement peut être obtenue selon un procédé où une composition de revêtement fabriquée selon le procédé sol-gel par voie humide chimique est déposée sur la surface métallique et/ou la couche de base et est compactée thermiquement.

8. Objet selon l'une des revendications 1 à 7, l'objet étant **caractérisé en ce qu'**il est un récipient, de préférence un plat de cuisson, la couche protectrice étant disposée sur la face interne ou sur une partie de la face interne du récipient.

9. Objet selon la revendication 8, **caractérisé en ce que** le récipient présente, sur une surface métallique de la face externe ou d'une partie de la face externe, une couche protectrice externe qui comprend une couche de base comportant une matrice d'un silicate alcalin et/ou alcalino-terreux, qui renferme de préférence au moins un pigment, et une couche de recouvrement comportant une matrice d'un silicate alcalin et/ou alcalino-terreux, qui renferme au moins une charge, de préférence une charge abrasive, par exemple une charge lamellaire.

10. Procédé de fabrication d'une couche protectrice en verre, en vitrocéramique ou de type céramique, qui comprend une couche de base et une couche de recouvrement, sur une surface métallique d'un objet, **caractérisé en ce que**
a) une composition de revêtement comprenant un silicate alcalin et/ou un silicate alcalino-terreux est déposée par voie humide chimique sur la surface métallique et compactée thermiquement pour former la couche de base, et
b) une composition de revêtement comprenant un hydrolysat ou condensat d'un ou plusieurs silanes hydrolysables, exempt de métal alcalin et de métal alcalino-terreux, est déposée par voie humide chimique sur la couche de base et compactée thermiquement pour former la couche de recouvrement,
dans lequel le compactage thermique pour former la couche de base peut s'effectuer avant l'application de la composition de revêtement pour la couche de recouvrement ou par la suite conjointement avec le compactage thermique pour former la couche de recouvrement, et la couche de base présente une épaisseur de 1 à 20 µm, **caractérisé en ce qu'**un ou plusieurs pigments choisis parmi un oxyde d'un ou plusieurs éléments choisis parmi Al, Sn, Y, Ce, Ti, Zr, Fe, Co, Ni, Cu, Zn, Nb et Ta sont présents dans la couche de base.

11. Procédé selon la revendication 10, **caractérisé en ce que** la composition de revêtement pour la couche de base et la composition de revêtement pour la couche de recouvrement sont fabriquées par le biais d'un procédé sol-gel.

12. Procédé selon la revendication 10 ou la revendication 11, **caractérisé en ce que** la composition de revêtement de la couche de base et/ou de la couche de recouvrement appliquée et le cas échéant séchée est compactée à une température située dans la plage de 250 à 700°C, de préférence de 350 à 600°C.

13. Procédé selon l'une des revendications 10 à 12, **caractérisé en ce que**
a) la composition de revêtement de la couche de base est obtenue par hydrolyse et polycondensation d'un ou plusieurs silanes de formule générale (I)
RₙSiX₄₋ₙ (I)
dans laquelle les groupes X, identiques ou différents les uns des autres, sont des groupes hydrolysables ou des groupes hydroxyle, les radicaux R, identiques ou différents les uns des autres, représentent l'hydrogène, des groupes alkyle, alcényle et alcynyle ayant jusqu'à 4 atomes de carbone, et des groupes aryle, aralkyle et alkaryle ayant 6 à 10 atomes de carbone et n représente 0, 1 ou 2, à condition qu'au moins un silane avec n égal à 1 ou 2 soit utilisé, ou les oligomères qui en sont dérivés,
en présence d'au moins un composé de métal alcalin ou alcalino-terreux, de préférence d'un composé provenant du groupe des oxydes et hydroxydes et des composés organométalliques de métaux alcalins et alcalino-terreux, de particules de SiO₂ nanométriques le cas échéant ajoutées et/ou le cas échéant d'alcoxydes ou de composés solubles des métaux B, Al, Si, Ge, Sn, Y, Ce, Ti ou Zr, et/ou
b) la composition de revêtement de la couche de recouvrement est obtenue par hydrolyse et polycondensation d'un ou plusieurs silanes de formule générale (I)
RₙSiX₄₋ₙ (I)
dans laquelle les groupes X, identiques ou différents les uns des autres, sont des groupes hydrolysables ou des groupes hydroxyle, les radicaux R, identiques ou différents les uns des autres, représentent l'hydrogène, des groupes alkyle, alcényle et alcynyle ayant jusqu'à 4 atomes de carbone, et des groupes aryle, aralkyle et alkaryle ayant 6 à 10 atomes de carbone et n représente 0, 1 ou 2, à condition qu'au moins un silane avec n égal à 1 ou 2 soit utilisé, ou les oligomères qui en sont dérivés,
le cas échéant en présence de particules de SiO₂ nanométriques ajoutées et/ou le cas échéant d'alcoxydes ou de composés solubles des métaux B, Al, Si, Ge, Sn, Y, Ce, Ti ou Zr, et/ou
c) la composition de revêtement de la couche anti-adhérente le cas échéant mise en oeuvre est obtenue par hydrolyse et polycondensation d'un ou plusieurs silanes de formule générale (II) :
Rf(R)_{b}SiX_{(3-b)} (II)
dans laquelle X et R sont tels que définis dans la formule générale (I), Rf est un groupe non hydrolysable, qui présente 1 à 30 atomes de fluor liés à des atomes de carbone aliphatique, et b est 0, 1 ou 2, et le cas échéant d'un ou plusieurs silanes de formule générale (I) telle que définie précédemment, le cas échéant en présence de particules de SiO₂ nanométriques ajoutées et/ou d'alcoxydes ou de composés solubles des métaux B, Al, Si, Ge, Sn, Y, Ce, Ti ou Zr, ou
par hydrolyse et polycondensation d'un ou plusieurs silanes de formule générale (I), dans laquelle X et R sont tels que définis précédemment et n est égal à 0, en présence d'un composé fluoré organique.

14. Procédé selon l'une des revendications 10 à 13, **caractérisé en ce que** le rapport atomique Si:(métal alcalin et/ou métal alcalino-terreux) dans la composition de revêtement pour la couche de base se situe dans la plage de 20:1 à 7:1, en particulier de 15:1 à 10:1.

15. Procédé selon l'une des revendications 10 à 14, **caractérisé en ce que** la composition de revêtement de la couche de recouvrement comprend des pigments et/ou des charges.

16. Procédé selon l'une des revendications 10 à 15, **caractérisé en ce qu'**une composition de revêtement fluorée est appliquée sur la couche de recouvrement et est calcinée thermiquement pour former une couche anti-adhérente, la composition de revêtement fluorée comprenant un hydrolysat ou un condensat d'un composé de silicium hydrolysable.
